# EUROPEAN PATENT APPLICATION

(11) **EP 4 840 713 A1**
(43) Date of publication of application: **18.11.2026**
(21) Application number: 24925647.0
(22) Date of filing: 25.12.2024
(51) Int. Cl.: B60W 30/06, B60R 1/27, B62D 15/02

(54) **PARKING ASSISTANCE METHOD AND APPARATUS, AND VEHICLE, STORAGE MEDIUM AND PROGRAM PRODUCT**

(30) Priority: 20.02.2024 CN 202410190053
(71) Applicant: Yinwang Intelligent Technologies Co., Ltd., Shenzhen, Guangdong 518110 (CN)
(72) Inventor: WANG, Wenxiao, Shenzhen, Guangdong 518129 (CN); XU, Ting, Shenzhen, Guangdong 518129 (CN); QIN, Cai, Shenzhen, Guangdong 518129 (CN); FEI, Teng, Shenzhen, Guangdong 518129 (CN); WANG, Qiran, Shenzhen, Guangdong 518129 (CN)
(74) Representative: MERH-IP Matias Erny Reichl Hoffmann Patentanwälte PartG mbB
(86) International application number: PCT/CN2024/142290
(87) International publication number: WO 2025/175910

(57) **Abstract**

A parking assistance method and apparatus, a vehicle, a storage medium, and a program product are disclosed, to enhance parking efficiency. The method includes: controlling a display apparatus (222) to display a parking area, where the parking area is generated based on a surrounding environment of a vehicle; controlling, based on a first instruction, the display apparatus (222) to display a first parking location; and annotating a location of a first obstacle, where the first obstacle includes an obstacle that interacts with the first parking location. By using the method, a user can accurately learn of a location of an obstacle that affects parking, to assist the user in avoiding the obstacle and quickly selecting a parking-available location without the obstacle. This reduces parking location selections made by the user, effectively enhances parking efficiency, and improves parking experience of the user.

## Description

### CROSS-REFERENCE TO RELATED APPLICATIONS

This application claims priority to Chinese Patent Application No. 202410190053.8, field with the China National Intellectual Property Administration on February 20, 2024 and entitled "PARKING ASSISTANCE METHOD AND APPARATUS, VEHICLE, STORAGE MEDIUM, AND PROGRAM PRODUCT", which is incorporated herein by reference in its entirety.

### TECHNICAL FIELD

This application relates to the field of parking technologies, and in particular, to a parking assistance method and apparatus, a vehicle, a storage medium, and a program product.

### BACKGROUND

Parking is a technology that enables a vehicle to travel into a parking space in a low-speed traveling scenario, including full-automatic parking assist, semi-automatic parking assist, and manual parking.

Compared with semi-automatic parking assist and manual parking, full-automatic parking assist simply requires a user to give an instruction on a vehicle-mounted display, a mobile phone, a remote control, or another device, to automatically guide the vehicle into a pre-planned parking space or one specified by the user, eliminating the need for a manual operation and even allowing parking without the user being present in the vehicle. Full-automatic parking assist offers a more intelligent and convenient parking experience to the user, and has gradually become a basic configuration of the vehicle.

However, a current mainstream full-automatic parking assist solution has a problem of low parking efficiency. Especially in a scenario in which the user needs to specify a parking space, the user usually needs to make a plurality of selections before finally finding a proper parking space. This greatly reduces parking efficiency of the user, and is not conducive to improving parking experience of the user. Therefore, how to enhance parking efficiency is a pressing technical problem that needs to be resolved in the field of automatic parking assist.

### SUMMARY

This application provides a parking assistance method and apparatus, a vehicle, a storage medium, and a program product, to enhance parking efficiency.

According to a first aspect, this application provides a parking assistance method. The method includes: controlling a display apparatus to display a parking area, where the parking area is generated based on a surrounding environment of a vehicle; controlling, based on a first instruction, the display apparatus to display a first parking location; and annotating a location of a first obstacle, where the first obstacle includes an obstacle that interacts with the first parking location.

By using the foregoing method, the obstacle that interacts with the first parking location is annotated, so that a user can accurately learn of a location of an obstacle that affects parking, to assist the user in avoiding the obstacle and quickly selecting a parking-available location without the obstacle. This reduces parking location selections made by the user, effectively enhances parking efficiency, and improves parking experience of the user.

In a possible design, the obstacle that interacts with the first parking location includes an obstacle in the first parking location and/or an obstacle that is outside the first parking location and that is to interact with the first parking location.

According to the foregoing design, a static obstacle and/or a dynamic obstacle that affects parking currently may be annotated. The static obstacle is annotated, to assist the user in quickly avoiding the obstacle in the first parking location. In addition, a warning is given to the dynamic obstacle, to assist the user in avoiding, in advance, the obstacle that will appear in the first parking location, and to avoid a phenomenon that the user is interrupted by the dynamic obstacle during parking and reselects a parking location. This maintains high parking efficiency.

In a possible design, the first obstacle is displayed outside the first parking location, and the first obstacle is completely or partially located in the first parking location; and whether the first obstacle is completely or partially located in the first parking location is determined by the vehicle based on a sensing result of a vehicle-mounted sensor.

According to the foregoing design, an obstacle that is not displayed in the first parking location due to a reason like image distortion may also be annotated, so that the user can accurately learn of an actual location of the obstacle when the user cannot view the obstacle in the parking area or views an incorrect obstacle location. This can assist the user in quickly selecting a parking-available location.

In a possible design, the first parking location is a parking location automatically generated by the vehicle, and/or the first parking location is a parking location determined by the user.

According to the foregoing design, the parking assistance method may be compatible with different parking space selection functions in the vehicle, or vehicles having different parking space selection functions. This can improve universality of the parking assistance method.

In a possible design, annotating the location of the first obstacle includes: performing environment sensing based on a plurality of sensors, and performing obstacle occupancy annotation on the first parking location.

According to the foregoing design, an occupancy status of an obstacle can be intuitively presented to the user, so that the user accurately learns of a location of the obstacle.

In a further possible design, annotating the location of the first obstacle includes at least one of the following three pieces of annotation content:
annotation content 1: annotating a location that is of the first obstacle and that is closest to a center point of the first parking location, so that the user quickly locates a point at which the first obstacle intrudes into the first parking location most deeply, and learns of a degree of occupancy of the first obstacle in the first parking location;
annotation content 2: annotating a contour of the first obstacle, so that the user accurately learns of an occupancy area of the first obstacle in the first parking location, to help the user quickly select a parking-available location outside the area; and
annotation content 3: annotating a central location of the first obstacle, so that the user quickly locates a center point of the first obstacle, to help the user select a parking-available location in a radiation manner based on the center point.

In a possible design, annotating the location of the first obstacle includes: when the first parking location includes a plurality of subareas, performing obstacle occupancy annotation on each subarea.

According to the foregoing design, a subarea to which an obstacle belongs can be annotated. Even if an actual location of the obstacle deviates from a detected location of the obstacle due to some reasons (for example, a detection error), the actual location of the obstacle can be included in the subarea to which the obstacle belongs, and annotated synchronously. This increases a probability that the user adjusts to a parking-available location based on the annotation.

In a possible design, annotating the location of the first obstacle includes: when a part of the first parking location is located outside the parking area, and the first obstacle occupies the part that is outside the parking area, performing obstacle occupancy annotation on an edge of the parking area covered by the first parking location.

According to the foregoing design, the user can learn of a location relationship between an obstacle outside the parking area and the first parking location, to assist the user in avoiding a direction in which the obstacle outside the parking area is located and quickly select a parking-available location.

In a possible design, annotating the location of the first obstacle includes: identifying the first obstacle; and if the first obstacle affects parking, annotating the first obstacle as occupied; or if the first obstacle does not affect parking, annotating the first obstacle as unoccupied, or not annotating the first obstacle.

According to the foregoing design, an obstacle that affects parking and an obstacle that does not affect parking can be distinguished and annotated, so that the user learns of a type of a current obstacle, to respond more pertinently.

In a further possible design, it is considered that the first obstacle affects parking when the first obstacle meets at least one of the following conditions: a height of the first obstacle exceeds a specified height, a farthest distance at which the first obstacle intrudes into the first parking location is greater than a specified distance, or the first obstacle is not in a preset allowlist.

According to the foregoing design, an obstacle that scratches a vehicle chassis in height, an obstacle that intrudes into a parking location deeply, and an obstacle that is not in a specified allowlist are determined as obstacles that affect parking. This can cover various obstacles that affect parking in an actual scenario.

In a further possible design, if the first obstacle does not affect parking, first prompt information may further be sent, where the first prompt information is used to prompt the user to select whether to ignore the first obstacle; and then the vehicle is controlled based on a second instruction to park in the first parking location, where the second instruction is an instruction for ignoring the first obstacle.

Optionally, the first prompt information may be a voice prompt, a display prompt, a vehicle light blinking prompt, a vibration prompt, or the like. For example, the display apparatus may be controlled to display text information, to prompt the user to tap a corresponding button on the display apparatus or reply with a corresponding instruction by using a voice.

According to the foregoing design, in a scenario in which impact of an obstacle on parking can be ignored, prompt information is additionally sent, so that the user can quickly make a parking selection, and the user is assisted in completing parking as soon as possible.

In a further possible design, at least two different annotation manners of an occupancy annotation, a non-occupancy annotation, or occupancy annotations with different impact degrees are used. For example, an obstacle that does not affect parking is annotated in green, an obstacle that has large impact on parking is annotated in red, and an obstacle whose impact on parking is uncertain is annotated in yellow.

According to the foregoing design, different types of obstacles are distinguished and annotated, so that a type of a current obstacle can be more intuitively presented to the user, to help the user quickly respond to the current obstacle pertinently.

In a possible design, the first obstacle may include a dynamic obstacle and a static obstacle, and the dynamic obstacle and the static obstacle are annotated in different manners.

According to the foregoing design, the dynamic obstacle and the static obstacle are distinguished and annotated, so that the user can more intuitively learn a type of an obstacle that currently affects parking.

In a possible design, the annotation includes at least one of a human machine interface (human machine interface, HMI) annotation, a voice prompt annotation, a direction alert tone annotation, a light annotation, or a projection annotation. Optionally, the HMI annotation includes at least one of the following: a graphic annotation, a text annotation, a color annotation, or a pattern annotation.

According to the foregoing design, a plurality of annotation manners are supported, to implement diversified selections during parking assistance, meeting personalized requirements of users.

In a further possible design, the direction alert tone annotation includes: providing an alert tone from a corresponding direction relative to a driver inside the vehicle based on a location of the first obstacle relative to the first parking location.

According to the foregoing design, an alert tone may be provided in a location of an obstacle relative to the vehicle, so that attention of the user is drawn to the sound-producing location. In this way, the user can more intuitively obtain the location in which the obstacle will affect parking, thereby improving the parking experience of the user.

In a possible design, the method further includes: providing first recommendation information based on the location of the first obstacle and the surrounding environment of the vehicle, where the first recommendation information indicates a recommended parking space adjustment direction and/or a recommended parking space adjustment location.

Optionally, the first recommendation information may be voice recommendation, display recommendation, vehicle light blinking recommendation, or the like. For example, the display apparatus may be controlled to display a dragging location or a dragging direction, to help the user adjust the parking location.

According to the foregoing design, recommendation information may be additionally sent to the user, to assist the user in quickly adjusting the parking location and complete parking more quickly.

In a possible design, the method further includes: annotating an edge location of the first obstacle; and/or annotating a critical safety location, where the critical safety location is a location at a preset safety distance from the edge location of the first obstacle.

According to the foregoing design, the user can more intuitively view an edge location or a critical safety location of an obstacle, to help the user quickly determine a safe area and more quickly select a parking-available location.

In a possible design, the method further includes: projecting the first parking location in the surrounding environment of the vehicle, and annotating the first obstacle in the projected first parking location.

According to the foregoing design, a warning may be given for an obstacle in the first parking location. When the obstacle is a dynamic obstacle, a signal can be given to the dynamic obstacle, to enable the dynamic obstacle to leave the first parking location as soon as possible, so as to assist the user in completing parking.

According to a second aspect, this application provides a parking assistance apparatus. The parking assistance apparatus may be a control apparatus in a vehicle, or may be a control apparatus outside a vehicle. The control apparatus in the vehicle may include but is not limited to: an apparatus configured to implement vehicle control, for example, a vehicle control unit (vehicle control unit, VCU) or a vehicle domain controller (vehicle domain controller, VDC), an apparatus configured to implement intelligent driving or assisted driving, for example, an intelligent driving domain control unit or a mobile data center (mobile data center, MDC), an apparatus configured to implement control on a vehicle component, for example, an electronic control unit (electronic control unit, ECU) or a motor control unit (motor control unit, MCU) of the vehicle, or an apparatus configured to implement control on a traveling manner of the vehicle, for example, an intelligent brake system (intelligent brake system, IBS). The control apparatus outside the vehicle may be, for example, a cloud server, a terminal device, a road side unit (road side unit, RSU), or another vehicle. The terminal device may be understood as a device of a user sitting in a controlled vehicle, for example, may include but is not limited to a mobile phone, a tablet computer, a notebook computer, a smartwatch, a Bluetooth headset, and another wearable device. These control apparatuses may be connected to related devices in the controlled vehicle through a network, for example, various sensors and display apparatuses, to implement a parking assistance operation on the controlled vehicle.

The parking assistance apparatus includes: a control module, configured to: control a display apparatus to display a parking area, where the parking area is generated based on a surrounding environment of the vehicle; and control, based on a first instruction, the display apparatus to display a first parking location; and an annotation module, configured to annotate a location of a first obstacle, where the first obstacle includes an obstacle that interacts with the first parking location.

In a possible design, the obstacle that interacts with the first parking location includes an obstacle in the first parking location and/or an obstacle that is outside the first parking location and that is to interact with the first parking location.

In a possible design, the first obstacle is displayed outside the first parking location, and the first obstacle is completely or partially located in the first parking location; and whether the first obstacle is completely or partially located in the first parking location is determined by the vehicle based on a sensing result of a vehicle-mounted sensor.

In a possible design, the first parking location is a parking location automatically generated by the vehicle, and/or the first parking location is a parking location determined by the user.

In a possible design, the annotation module is specifically configured to: perform environment sensing based on a plurality of sensors, and perform obstacle occupancy annotation on the first parking location.

In a further possible design, the annotation module is specifically configured to: annotate a location that is of the first obstacle and that is closest to a center point of the first parking location; or annotate a contour of the first obstacle; or annotate a central location of the first obstacle.

In a possible design, the annotation module is specifically configured to: when the first parking location includes a plurality of subareas, perform obstacle occupancy annotation on each subarea.

In a possible design, the annotation module is specifically configured to: when a part of the first parking location is located outside the parking area, and the first obstacle occupies the part that is outside the parking area, perform obstacle occupancy annotation on an edge of the parking area covered by the first parking location.

In a possible design, the annotation module is specifically configured to: identify the first obstacle; and if the first obstacle affects parking, annotate the first obstacle as occupied; or if the first obstacle does not affect parking, annotate the first obstacle as unoccupied.

In a further possible design, the annotation module is specifically configured to determine that the first obstacle affects parking if it is determined that the first obstacle meets at least one of the following conditions: a height of the first obstacle exceeds a specified height, a farthest distance at which the first obstacle intrudes into the first parking location is greater than a specified distance, or the first obstacle is not in a preset allowlist.

In a further possible design, the annotation module is further configured to: if the first obstacle does not affect parking, send first prompt information, where the first prompt information is used to prompt the user to select whether to ignore the first obstacle; and the control module is further configured to control, based on a second instruction, the vehicle to park in the first parking location, where the second instruction is an instruction for ignoring the first obstacle.

In a further possible design, at least two different annotation manners of an occupancy annotation, a non-occupancy annotation, or occupancy annotations with different impact degrees are used.

In a possible design, the first obstacle includes a dynamic obstacle and a static obstacle, and the dynamic obstacle and the static obstacle are annotated in different manners.

In a possible design, the annotation includes at least one of a human machine interface HMI annotation, a voice prompt annotation, a direction alert tone annotation, a light annotation, or a projection annotation.

In a further possible design, the HMI annotation includes at least one of the following: a graphic annotation, a text annotation, a color annotation, or a pattern annotation.

In a further possible design, when the direction alert tone annotation is used, the annotation module is specifically configured to provide an alert tone from a corresponding direction relative to a driver inside the vehicle based on a location of the first obstacle relative to the first parking location.

In a possible design, the annotation module is further configured to provide first recommendation information based on the location of the first obstacle and the surrounding environment of the vehicle, where the first recommendation information indicates a recommended parking space adjustment direction and/or a recommended parking space adjustment location.

In a possible design, the annotation module is further configured to: annotate an edge location of the first obstacle; and/or annotate a critical safety location, where the critical safety location is a location at a preset safety distance from the edge location of the first obstacle.

In a possible design, the annotation module is further configured to: project the first parking location in the surrounding environment of the vehicle, and annotate the first obstacle in the first parking location.

According to a third aspect, this application provides a parking assistance system. The parking assistance system may be integrated into a vehicle. The parking assistance system includes a control apparatus and a display apparatus. The control apparatus is configured to: generate a parking area based on a surrounding environment of the vehicle, and send the parking area to the display apparatus. The display apparatus is configured to display the parking area. The control apparatus is further configured to: control, based on a first instruction, the display apparatus to display a first parking location, and annotate a location of a first obstacle, where the first obstacle includes an obstacle that interacts with the first parking location.

In a possible design, the display apparatus may include a vehicle-mounted display, for example, an instrument panel, a central control screen, or a front passenger screen, or may include a vehicle-mounted projection screen, for example, a windshield or a sunroof.

In a possible design, the parking assistance system may further include a camera. The camera is configured to capture an environment image. The control apparatus is further configured to generate the parking area based on the environment image captured by the camera.

In a possible design, the parking assistance system may further include a vehicle-mounted sensor. The vehicle-mounted sensor may include one or more of a camera, a radar, or a sonar. The vehicle-mounted sensor is configured to: collect environment information, and identify a location and/or a moving trajectory of an obstacle from the environment information. The control apparatus is configured to determine, based on locations and/or moving trajectories of obstacles identified by various vehicle-mounted sensors, the obstacle that interacts with the first parking location.

In a possible design, the control apparatus is further configured to control the vehicle to park in the first parking location when the first obstacle does not exist.

In a further possible design, the parking assistance system may further include a mechanical steering gear, a motor controller, and a motor. The mechanical steering gear is connected between a steering wheel and a wheel. The motor is connected between the motor controller and the wheel. The control apparatus is specifically configured to: when the first obstacle does not exist, plan a parking trajectory of the vehicle based on a current location of the vehicle and the first parking location, determine a next turning angle and a next rotational speed based on the parking trajectory, send the turning angle to the mechanical steering gear, and send the rotational speed to the motor controller. The mechanical steering gear is configured to drive the wheel to rotate by a corresponding angle based on the turning angle from the control apparatus. The motor controller is configured to: generate a corresponding drive electrical signal based on the rotational speed from the control apparatus, and send the drive electrical signal to the motor. The motor is configured to rotate based on the received drive electrical signal, to drive the wheel to rotate.

It should be noted that all designs in the first aspect are also applicable to the third aspect. Details are not described herein again.

According to a fourth aspect, this application provides a parking assistance apparatus, including a processor. The processor is coupled to a memory; and the processor is configured to execute a computer program or instructions stored in the memory, so that the parking assistance apparatus performs the parking assistance method according to the first aspect or any design of the first aspect.

According to a fifth aspect, this application provides a vehicle, including the parking assistance system according to the third aspect or any design of the third aspect, or including a unit or a module configured to implement the parking assistance method according to the first aspect or any design of the first aspect. For example, the vehicle may include the parking assistance apparatus according to the second aspect or any design of the second aspect, or may include the parking assistance apparatus according to the fourth aspect.

According to a sixth aspect, this application provides an electronic device. The electronic device is connected to a controlled vehicle, and is configured to communicate with the controlled vehicle, to implement the parking assistance method according to the first aspect or any design of the first aspect. The electronic device may include a unit or a module configured to implement the parking assistance method according to the first aspect or any design of the first aspect. For example, the electronic device may include the parking assistance apparatus according to the second aspect or any design of the second aspect, or may include the parking assistance apparatus according to the fourth aspect.

According to a seventh aspect, this application provides a computer-readable storage medium. The computer-readable storage medium stores a program or instructions. When the program or the instructions are executed, the parking assistance method according to the first aspect or any design of the first aspect is implemented.

According to an eighth aspect, this application provides a computer program product. The computer program product includes computer program code, and when the computer program code is run on a computer, the computer is caused to perform the parking assistance method according to the first aspect or any design of the first aspect.

For technical effects that can be achieved in the second aspect to the eighth aspect, refer to the descriptions of beneficial effects in the first aspect. Details are not described herein again.

### BRIEF DESCRIPTION OF DRAWINGS

FIG. 1 is an example diagram of a possible application scenario according to this application;
FIG. 2 is an example diagram of an architecture of a parking assistance system according to this application;
FIG. 3 is an example schematic flowchart of a parking assistance method according to this application;
FIG. 4a is an example diagram of a front-view parking area according to this application;
FIG. 4b is an example diagram of a top-view parking area according to this application;
FIG. 5a is an example diagram of a parking area in which a parking space is customized according to this application;
FIG. 5b is an example diagram of a parking area in which a parking location is dragged according to this application;
FIG. 6a is an example diagram of a parking area in which a parking space is automatically generated according to this application;
FIG. 6b is an example diagram of a parking area in which an automatically generated parking space is selected according to this application;
FIG. 7a is an example diagram of annotating a central location of an obstacle according to this application;
FIG. 7b is an example diagram of annotating a contour of an obstacle according to this application;
FIG. 7c is an example diagram of annotating a farthest intrusion point of an obstacle according to this application;
FIG. 8 is an example diagram of an area annotation manner of a first parking location according to this application;
FIG. 9a is an example diagram of annotating an obstacle by using a symbol according to this application;
FIG. 9b is an example diagram of annotating an obstacle by using text according to this application;
FIG. 9c is an example diagram of annotating an obstacle by using a color according to this application;
FIG. 9d is an example diagram of annotating an obstacle by using a pattern according to this application;
FIG. 9e is an example diagram of annotating an obstacle by using a line according to this application;
FIG. 10a is an example diagram of a scenario in which an obstacle is located outside a parking area according to this application;
FIG. 10b is an example diagram of annotating an obstacle outside a parking area according to this application;
FIG. 10c is another example diagram of annotating an obstacle outside a parking area according to this application;
FIG. 11a is an example diagram of a parking area with a recommended dragging location and a recommended dragging direction according to this application;
FIG. 11b is an example diagram of a parking area in which an obstacle edge location and a critical safety location are annotated according to this application;
FIG. 12a is an example diagram of annotating an obstacle in a parallel parking space according to this application;
FIG. 12b is an example diagram of annotating an obstacle in a perpendicular parking space according to this application;
FIG. 12c is another example diagram of annotating an obstacle in a perpendicular parking space according to this application;
FIG. 12d is an example diagram of annotating an obstacle in a parking area according to this application;
FIG. 12e is another example diagram of annotating an obstacle in a parking area according to this application;
FIG. 12f is another example diagram of annotating an obstacle in a parking area according to this application;
FIG. 12g is another example diagram of annotating an obstacle in a parking area according to this application;
FIG. 12h is another example diagram of annotating an obstacle in a parking area according to this application;
FIG. 13 is an example diagram of an architecture of a parking assistance system according to this application;
FIG. 14 is an example diagram of a structure of a parking assistance apparatus according to this application; and
FIG. 15 is another example diagram of a structure of a parking assistance apparatus according to this application.

### DESCRIPTION OF EMBODIMENTS

The following describes in detail embodiments of this application with reference to the accompanying drawings.

Some terms in this application are described below. It should be noted that these explanations are intended for ease of understanding by a person skilled in the art, but do not constitute a limitation on the protection scope claimed in this application.

### 1. Image distortion of a parking area

When a camera is shooting an image, an ideal location is a location perpendicular to a shooting plane, so that the image can be reproduced according to an original geometric ratio. However, during actual application of an intelligent driving vehicle, due to a limitation of a vehicle body structure, there is a specific pre-targeting distance from a mounting location of the camera, a horizontal scan plane and a vertical scan plane of the camera expand in a sector shape, and the camera is at a specific angle with the ground. The existence of the angle causes specific distortion in the captured image, and the distortion mainly includes radial distortion and tangential distortion.

Due to the existence of the foregoing distortion, when an environment image of a parking area is displayed, problems such as misplacement and inaccuracy may occur. For example, a vehicle sensor detects that an obstacle exists in a specific location, but no obstacle is displayed in the location of the parking area in a display apparatus. As a result, when selecting a parking location, a user may mistakenly select the location in which the obstacle exists, bringing inconvenience to the user in selecting the parking location.

### 2. Parallel parking space and perpendicular parking space

The parallel parking space is also referred to as a horizontal parking space. The parallel parking space occupies large space, and parking is convenient. The parallel parking space is usually applicable to parking on a roadside. The perpendicular parking space saves space, but requires reversing during parking or driving. The perpendicular parking space is usually applicable to indoor and outdoor parking lots. Generally, in a parking area, if a parking space is opened in a long-side direction, it indicates that the parking space is a parallel parking space, or if a parking space is opened in a short-side direction, it indicates that the parking space is a perpendicular parking space.

The foregoing describes some terms used in this application, and the following describes possible application scenarios of this application.

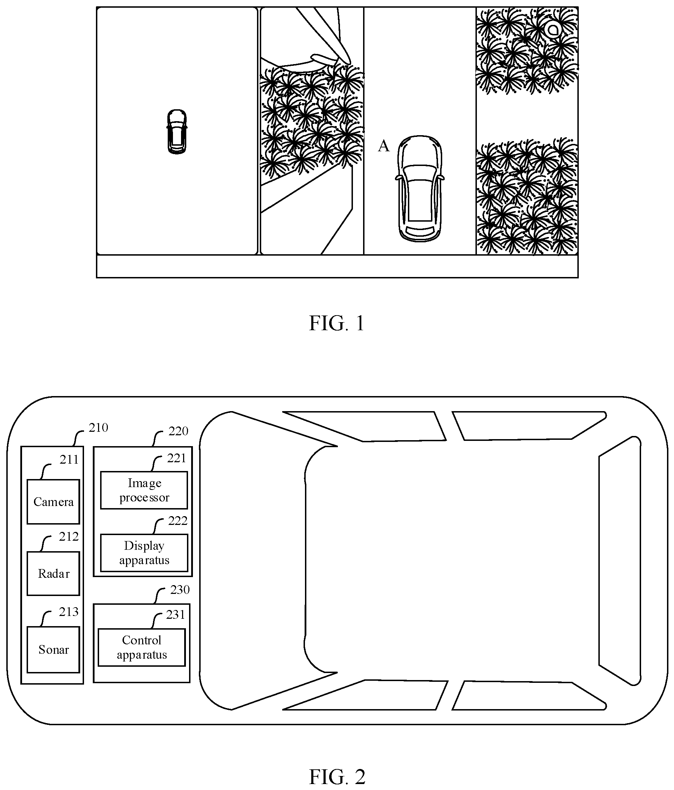

FIG. 1 is an example diagram of a possible application scenario according to this application. In this application scenario, an example in which a parking assistance solution is applied to a vehicle is used, and the vehicle has an automatic parking assist function. As shown in FIG. 1, it is assumed that a vehicle to be parked is a vehicle A, there is an idle area on a right side of the vehicle A, and green plants grow on two sides of the idle area. In a current parking scenario, if a user enables the automatic parking assist function, the vehicle A may automatically capture a surrounding environment of the vehicle, generate a parking area based on the surrounding environment of the vehicle, display the parking area to the user on a display apparatus, and wait for the user to select a parking location. Subsequently, if the parking location selected by the user is not occupied, the vehicle may plan a traveling path based on a current location and the parking location, and automatically park in the parking location based on the traveling path. On the contrary, if the parking location selected by the user is occupied, the vehicle may indicate the user to reselect a parking location, and after the user selects a parking-available location, the vehicle is controlled to automatically park in the parking-available location.

For example, the vehicle may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or another new energy vehicle (new energy vehicle, NEV), or may be a fuel vehicle. These vehicles may be applied to the field of unmanned driving, assisted driving, intelligent driving, autonomous driving, connected vehicles, or the like.

It should be understood that the foregoing application scenario is merely an example. The parking assistance solution provided in this application may alternatively be applied to another possible scenario, and is not limited to the scenario in the foregoing example. For example, the parking assistance solution may further be applied to another transportation tool, for example, a ship, an airplane, a train, a subway, a high-speed railway, a submarine, a rocket, or a spacecraft, as an auxiliary control solution for implementing efficient parking of the another transportation tool, to reduce an unnecessary parking delay of the transportation tool. For another example, the parking assistance solution may further be applied to the medical field, for example, applied to a smart wheelchair with a display. When an obstacle exists in an automatically planned parking location, a location of the obstacle is displayed to a patient taking the wheelchair, to assist the patient in planning a safe parking location. For another example, the parking assistance solution may further be applied to the field of smart home, for example, a ground sweeping robot, a ground mopping robot, an autonomous food delivery robot, or a mobile smart household appliance. These devices may interact with a user terminal, to assist the user in remotely instructing a safe parking location. For another example, the parking assistance solution may further be applied to a smart life scenario, for example, may be applied to an auto-follow suitcase, or may be applied to a smart dining chair, or may be applied to a smart personal mobility device. Details are not enumerated herein.

It should be noted that the application scenarios described in this application are intended to describe the technical solutions in this application more clearly, and do not constitute a limitation on the technical solutions provided in this application.

As described in the background, an existing automatic parking assist solution has a problem of low parking efficiency. This problem is particularly obvious in an automatic parking assist solution in which a parking location is selected by using a parking space customization function (or referred to as customized parking, customized parking space parking, or the like). The parking space customization function is a parking space selection function commonly used by users currently. The parking space customization function allows the user to select a parking location or drag the vehicle to a desired parking location in a parking area, to meet a personalized customization requirement of the user. However, it can be learned from content of the foregoing term explanation part that a displayed image of a parking area usually has specific distortion. The distortion causes the image of the parking area to be in a state different from that of an actual environment. For example, an obstacle exists in a location in the actual environment, and the vehicle also detects the obstacle. However, the obstacle is not displayed in the location in the parking area, or a location of the displayed obstacle deviates from the actual location, or a size of the displayed obstacle deviates from an actual size, or the like. Under impact of the deviation, when the user selects a parking location based only on the displayed image of the parking area, the user is prone to mistakenly select the location in which the obstacle exists. As a result, the currently selected parking location is unavailable for parking.

When the parking location is unavailable for parking, in a parking solution provided in the industry currently, only a parking-unavailable state is displayed in the parking area, for example, text content "The current location is unavailable for parking" is displayed. However, from the perspective of the user, the currently selected location in the parking area is not blocked by an obstacle. Even if the user learns of the parking-unavailable state, the user does not know a specific location or size of the obstacle. As a result, when selecting a next parking location, the user may still select a location occupied by the obstacle. Further, the user may need to make a plurality of selections repeatedly, to finally select a proper parking location. This repeated selection manner clearly reduces efficiency of automatic parking assist, and is not conducive to improving automatic parking assist experience of the user.

In view of this, this application provides a parking assistance method. When an obstacle exists in a currently selected parking location, the obstacle is annotated, so that a user can accurately learn of a location of the obstacle, to assist the user in avoiding the obstacle and quickly selecting a parking-available location without the obstacle. This enhances efficiency of automatic parking assist and improves parking experience of the user.

The following describes in detail a parking assistance solution provided in this application with reference to specific accompanying drawings.

In embodiments of this application, if there is no special description or logic conflict, terms and/or descriptions in different embodiments are consistent and may be mutually referenced. Technical features in different embodiments may be combined to form a new embodiment based on an internal logical relationship between the technical features.

To facilitate understanding of this application, a system for implementing a parking assistance function is first provided. FIG. 2 is a diagram of a possible architecture of the system. The architecture may include three types of systems from a function perspective: a sensor system 210, a human machine interaction system 220, and a control system 230.

The sensor system 210 may include various vehicle-mounted sensors configured to detect a surrounding environment of a vehicle, for example, a camera 211 (for example, four fisheye cameras) and a radar 212 (for example, an ultrasonic radar like 12 ultrasonic radars). The camera 211 is usually mounted beside a license plate light on a license plate holder, inside a bumper, on a vehicle door, at the bottom of a side mirror, or in another location, and is mainly responsible for capturing an environment image around a vehicle body. The radar 212 is usually mounted on a vehicle roof, near a bumper, on a vehicle light, on a vehicle door, on a side mirror, or in another location, and is mainly responsible for collecting information about a distance between an obstacle around the vehicle body and the ego vehicle. In some embodiments, the sensor system 210 may further include a sonar 213. The sonar 213 is usually mounted at a vehicle head or a vehicle rear, and is mainly responsible for collecting a distance between an obstacle (for example, a vehicle, a pedestrian, or another obstacle) in front of or behind the vehicle and the vehicle head or the vehicle rear, to prevent a collision.

The human machine interaction system 220 may also be referred to as an HMI system, and may include various devices configured to implement human machine interaction, for example, an image processor 221 and a display apparatus 222. The image processor 221 is connected to the camera 211, and is mainly responsible for processing the environment image captured by the camera 211, to complete operations such as parking space recognition, obstacle recognition, and passable area recognition. In some scenarios, the image processor 221 may further perform anti-distortion processing on the environment image, for example, inverse perspective mapping (inverse perspective mapping, IPM). The display apparatus 222 may include any type of screen that can implement a display function, for example, a vehicle-mounted display like a dashboard, a navigation screen, a central control screen, or a front passenger screen, a projection screen like a sunroof or a side window, and a windshield in a head-up display (head-up display, HUD).

The control system 230 may include various devices configured to implement control of an entire vehicle and components in the entire vehicle, for example, may include a control apparatus 231. The control apparatus 231 is mainly responsible for scheduling a module, receiving radar data, image processing data, and sonar data, completing data information fusion, determining a planning solution, generating and outputting a planning instruction, and the like. The control apparatus 231 may be any control apparatus in the vehicle, for example, including but not limited to: an apparatus configured to implement vehicle control, for example, a VCU or a VDC, an apparatus configured to implement intelligent driving or assisted driving, for example, an intelligent driving domain control unit or an MDC, an apparatus configured to implement control on a vehicle component, for example, an ECU or an MCU, or an apparatus configured to implement control on a traveling manner of the vehicle, for example, an IBS.

For example, in a specific example, after the vehicle is started, the default control apparatus 231 of the vehicle is the VCU or the VDC. However, when the vehicle starts an automatic parking assist function, the MDC takes over vehicle control. Therefore, the control apparatus 231 becomes the MDC. After the automatic parking assist ends, the VCU or the VDC takes over the vehicle again, so that the control apparatus 231 is changed back to the VCU or the VDC. Therefore, in this example, when a user starts the automatic parking assist function, the control apparatus 231 may be considered as the MDC. However, it should be understood that in another example, the automatic parking assist function may also be encapsulated in another control apparatus, for example, the VCU or the VDC. In this case, the control apparatus 231 in the automatic parking assist process may alternatively be the VCU or the VDC. This is not specifically limited in this application.

It should be understood that the foregoing architecture of a parking assistance system is merely an example. In another example, the parking assistance system may further include more, fewer, or different assemblies, and each assembly may also include more, fewer, or different components. In addition, the shown components or unshown components may be combined or divided in any manner. Division of units shown in the figure is merely logical function division, and all or some of the units may be integrated into one physical entity during actual implementation, or may be physically separated. This is not specifically limited in this application.

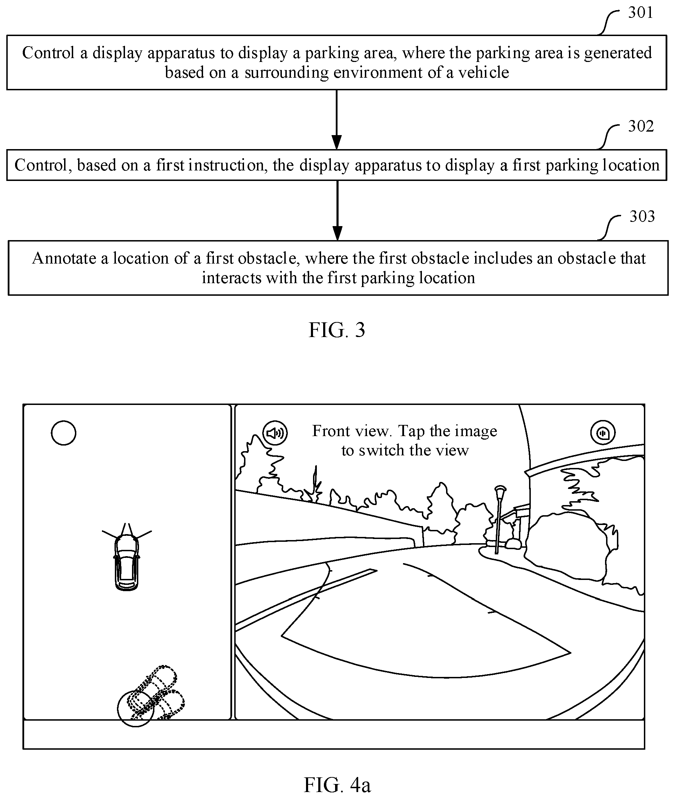

FIG. 3 is a schematic flowchart of a parking assistance method according to this application. The method is applicable to a parking assistance apparatus. The parking assistance apparatus may be a control apparatus in a vehicle, for example, the control apparatus 231 shown in FIG. 2. Alternatively, the parking assistance apparatus may be a control apparatus outside the vehicle, for example, a cloud server, a terminal device, an RSU, or another vehicle. The terminal device may be understood as a device of a user sitting in a controlled vehicle, for example, may include but is not limited to a mobile phone, a tablet computer, a notebook computer, a smartwatch, a Bluetooth headset, and another wearable device. The control apparatus outside the vehicle may be connected to related components, for example, the various vehicle-mounted sensors 211 to 213, the image processor 221, and the display apparatus 222 that are shown in FIG. 2, in the controlled vehicle through a network, to implement a parking assistance solution for the controlled vehicle.

For example, the parking assistance apparatus is the control apparatus 231 shown in FIG. 2. As shown in FIG. 3, the method includes the following steps.

Step 301: Control a display apparatus to display a parking area, where the parking area is generated based on a surrounding environment of the vehicle.

Optionally, in a traveling process of the vehicle, if receiving an automatic parking assist request triggered by a user, the control apparatus 231 may perform environment collection based on the various vehicle-mounted sensors 211 to 213, determine information about the ego vehicle and information about the surrounding environment of the vehicle, generate the parking area based on the information, and send the parking area to the display apparatus 222, to display the parking area to the user on the display apparatus 222.

For example, the control apparatus 231 may obtain the environment image captured by the camera 211, determine a location of the ego vehicle, a form of the ego vehicle, and the surrounding environment of the ego vehicle based on the environment image, generate the parking area based on a preconfigured image of the ego vehicle, and send the parking area to the display apparatus 222. In some scenarios, before sending the parking area to the display apparatus 222, the control apparatus 231 may further identify information about the obstacle (for example, a distance, a location, and a shape of the obstacle) around the vehicle based on radar data collected by the radar 212 and sonar data collected by the sonar 213, and then add the obstacle to the generated parking area, so that an image presented in the parking area is more detailed and accurate.

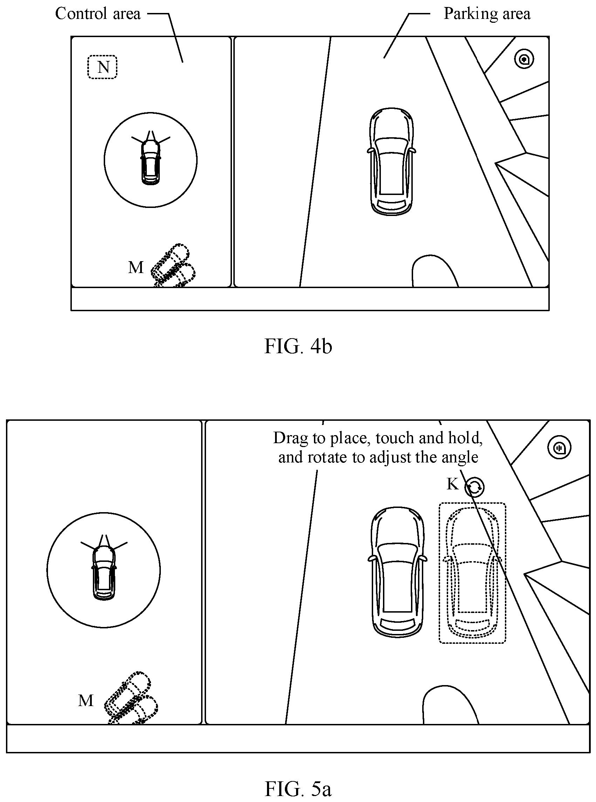

Further, optionally, the parking area may be divided in a plurality of views. For example, FIG. 4a and FIG. 4b show diagrams of parking areas in two possible views provided in this application. FIG. 4a shows a front view, and FIG. 4b shows a top view. In an example, after an automatic parking assist function is started, the control apparatus 231 may control the display apparatus 222 to display, by default, a front-view parking area shown in FIG. 4a. The parking area presents an environment image in front of the vehicle. When another view needs to be switched to, the user may tap a specific location in the parking area to switch to the another view. For example, the user taps an upper location in the parking area shown in FIG. 4a to switch to the top view shown in FIG. 4b. In addition to the environment image, the image of the ego vehicle may further be presented in the top view. In comparison with the front view, the top view can better reflect a status of the ego vehicle in the surrounding environment. Therefore, a top-view parking area is usually used as a reference interface for selecting a parking location. It may be understood that, actually, the vehicle may further include other views such as a rear view, a left view, and a right view. This is not specifically limited in this application.

The top view shown in FIG. 4b is used as an example. It should be noted that a complete parking interface is presented in the figure, and the parking interface can generally be divided into two parts: a left part and a right part. The left part is referred to as a control area, and the right part is referred to as a parking area. The control area on the left includes some control buttons. The user may control, by tapping the control buttons, the display apparatus 222 to display corresponding content in the parking area on the right. For details, refer to the following descriptions. It should be understood that the parking interfaces shown in FIG. 4a and FIG. 4b are merely examples, and a specific presentation form of the parking interface is not limited in this application. For example, in another possible example, the parking interface may be integrally presented, or may be divided into an upper part and a lower part, or may be divided into at least three parts. For another example, in another possible example, locations, functions, and forms of elements in the parking interface may be different from those in FIG. 4a and FIG. 4b. For example, a function button may be also replaced with a text form or an icon form, a location of the function button may also change, or the like. This is not specifically limited in this application.

Step 302: Control, based on a first instruction, the display apparatus to display a first parking location.

Optionally, the first instruction may be an instruction triggered after the user performs an operation, or may be an instruction automatically generated by the vehicle after the automatic parking assist function is started. For example, the first instruction may be an instruction triggered after the user performs dragging or makes a selection in the parking area. In this case, the first parking location is a parking location determined by the user, for example, a parking location dragged or selected by the user. For another example, the first instruction may be an instruction automatically generated by the vehicle after the vehicle detects that the automatic parking assist function is started. In this case, the first parking location is a parking location automatically generated by the vehicle.

It should be noted that the first parking location may be a parking location that is first dragged by the user, or first selected by the user, or first automatically generated by the vehicle after the automatic parking assist function is started, or may be a parking location that is re-dragged by the user, or reselected by the user, or regenerated by the vehicle after a parking location that is previously dragged by the user, or previously selected by the user, or previously automatically generated by the vehicle is unavailable for parking. This is not specifically limited.

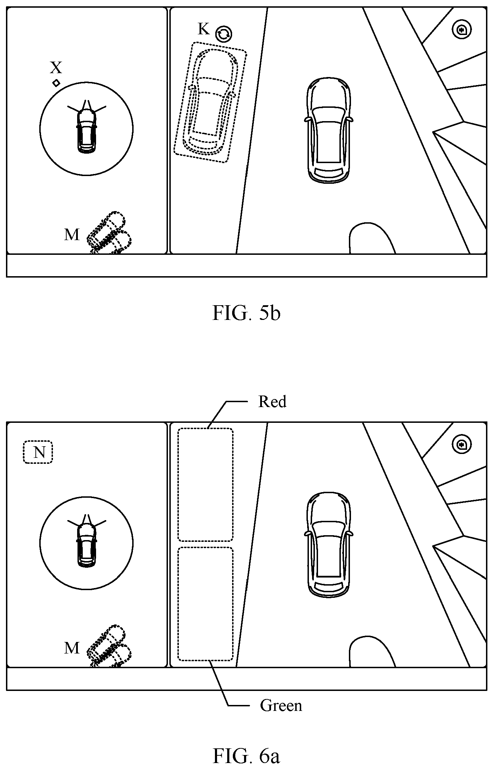

For example, the parking location that is first dragged by the user is used as an example. Refer to the parking area shown in FIG. 4b. A button M of a parking space customization function may further exist in the control area on the left. When detecting that the button M is tapped by the user, the control apparatus 231 may control the display apparatus 222 to generate and display a virtual parking space in the parking area on the right, as shown in FIG. 5a. The virtual parking space may be generated around the vehicle, for example, in any one or more of left, right, upper, and lower directions of the vehicle. The virtual parking space is draggable, and a rotation button K may further be displayed around the virtual parking space. The user may change a location of the virtual parking space by touching and holding, and dragging the virtual parking space. The user may change a posture of the virtual parking space by touching and holding, and rotating the rotation button K. A drag operation and a rotate operation of the user trigger the first instruction. The control apparatus 231 controls, based on the first instruction, the display apparatus 222 to display the virtual parking space in a location in which the drag operation and the rotate operation of the user end, namely, the first parking location. For example, refer to FIG. 5b. It is assumed that the control apparatus 231 moves the virtual parking space to the front left of the actual vehicle based on the first instruction triggered by the drag operation and the rotate operation of the user, and rotates the virtual parking space clockwise by a specific angle, so that the virtual parking space is exactly located on a high platform. In this case, a final location occupied by the virtual parking space is the first parking location.

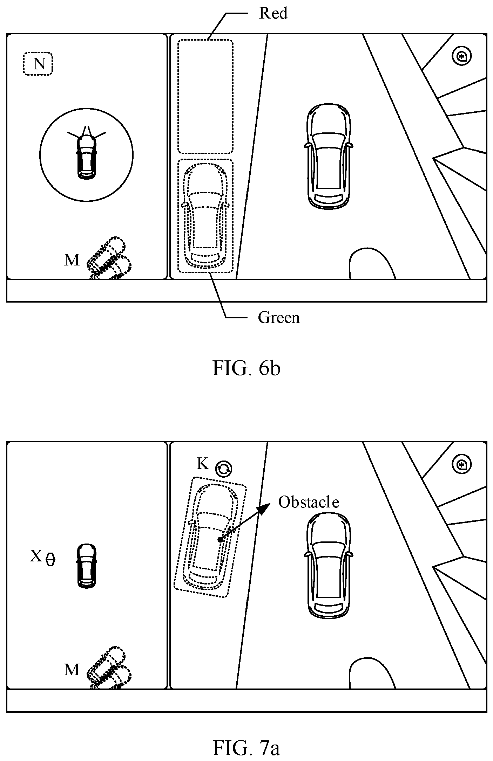

For another example, the parking location that is first selected by the user is used as an example. Refer to the parking area shown in FIG. 4b. A button N of a parking space automatic generation function may further exist in the control area on the left. When detecting that the button N is tapped by the user, the control apparatus 231 may automatically plan a plurality of parking-available locations and a plurality of parking-unavailable locations based on the information from the various vehicle-mounted sensors 211 to 213, and may control the display apparatus 222 to display these parking locations in the parking area on the right, as shown in FIG. 6a. Optionally, different types of parking locations may be presented to the user in different colors. For example, the parking-available location is displayed in green, and the parking-unavailable location is presented in red. The user may tap one of the parking locations to trigger the first instruction. The control apparatus 231 determines, based on the first instruction, the parking location tapped by the user as the first parking location, and may control the display apparatus 222 to fill the first parking location with a virtual vehicle identifier. For example, it is assumed that the control apparatus 231 detects that the user taps the green parking location shown in FIG. 6a. In this case, the control apparatus 231 may use the green parking location as the first parking location, and may control the display apparatus 222 to fill the green parking location with the virtual vehicle identifier, as shown in FIG. 6b.

For another example, the parking location that is first generated by the vehicle is used as an example. Refer to FIG. 6a. After the user taps a button N in the parking area, the first instruction may be automatically triggered. The control apparatus 231 automatically plans a plurality of parking-available locations and a plurality of parking-unavailable locations based on the information from the various vehicle-mounted sensors 211 to 213, and may automatically select one of the parking-available locations as the first parking location based on the first instruction. Further, the control apparatus 231 may control the display apparatus 222 to fill the first parking location with the virtual vehicle identifier, to obtain a parking area shown in FIG. 6b.

It may be understood that the first instruction may be triggered in another manner, for example, including but not limited to: triggered by a voice instruction of the user, a gesture instruction, a brainwave instruction, or the like. This is not listed one by one in this application.

Step 303: Annotate a location of a first obstacle, where the first obstacle includes an obstacle that interacts with the first parking location.

In a possible implementation, the control apparatus 231 may identify the environment based on the various vehicle-mounted sensors 211 to 213 to determine locations of one or more obstacles in the surrounding environment of the vehicle body, then filter, out from the one or more obstacles based on a location relationship between the locations of the one or more obstacles and the first parking location, an obstacle that affects parking of the vehicle in the first parking location, and determine the obstacle as the first obstacle.

Herein, the obstacle that affects parking of the vehicle in the first parking location may be understood as an obstacle that affects parking from a perspective of a location and/or a movement trend. For example, the obstacle that affects parking of the vehicle in the first parking location may include but is not limited to at least one of the following two types of obstacles:

A first type of obstacle is an obstacle that interacts with the first parking location. For example, it is an obstacle that is completely or partially displayed in the first parking location, for example, a static obstacle like a plastic bag, a cardboard box, a lawn, a stone block, or a curb, or a dynamic obstacle that is completely or partially located in the first parking location. For another example, it is an obstacle that is located outside the first parking location but that is to interact with the first parking location, for example, a dynamic obstacle like a pedestrian, an oncoming vehicle, a small animal, or a toy car that is to move to the first parking location within 1 minute (or another short time).

A second type of obstacle is an obstacle that is displayed outside the first parking location but that is sensed by a vehicle-mounted sensor to be completely or partially located in the first parking location. For example, it is a static obstacle and a dynamic obstacle that cannot be displayed in the first parking location due to image distortion or another reason.

For example, the two types of obstacles are included. The control apparatus 231 may obtain, based on identification on the surrounding environment of the vehicle by the camera 211, the radar 212, and the sonar 213, locations and moving trajectories of one or more obstacles identified by the camera 211, the radar 212, and the sonar 213; then determine, based on the locations of the one or more obstacles, whether a location of an obstacle is located in the first parking location, determine, based on the locations and the moving trajectories of the one or more obstacles, whether an obstacle is to move to the first parking location in a short period of time in the future, and determines, based on the locations and the moving trajectories of the one or more obstacles, whether an obstacle is partially or completely located in the first parking location but the obstacle is displayed outside the first parking location in the parking area; and then determine, as the first obstacle, the obstacle that is determined as "yes".

When the first obstacle is of the first type, the first obstacle is displayed in the first parking location, or is displayed outside the first parking location but is to move to the first parking location in a short period of time in the future. When the first obstacle is of the second type, the first obstacle is displayed outside the first parking location, but the vehicle determines, based on a sensing result of the vehicle-mounted sensor, that the first obstacle is completely or partially located in the first parking location. The first obstacle may be understood as, in an actual environment, an actual obstacle that corresponds to the first obstacle and that is displayed in the parking area.

It may be understood that if the first obstacle does not exist, it indicates that the first parking location is parking-available. In this case, the control apparatus 231 may send a control signal to another controller in the control system 230, to drive the another controller to automatically park the vehicle in the first parking location. For example, the control apparatus 231 may plan, based on the first parking location and a current location of the vehicle, a parking trajectory of parking the vehicle in the first parking location from the current location, determine a next turning angle and a next rotational speed of the vehicle based on the parking trajectory, send the turning angle to a mechanical rotator (for example, a steering rod) of the vehicle, and send the rotational speed to a motor controller of the vehicle. The mechanical steering gear is connected between a steering wheel and a wheel of the vehicle. After receiving the turning angle from the control apparatus 231, the mechanical rotator may drive the wheel and the steering wheel to rotate by a corresponding angle. Rotation of the steering wheel may present steering information to the user, and rotation of the wheel may drive the vehicle to turn. The motor controller is connected to a motor of the vehicle, and the motor is connected to the wheel. After receiving the rotational speed from the control apparatus 231, the motor controller may generate a corresponding drive electrical signal and send the drive electrical signal to the motor, to drive the motor to rotate at the rotational speed corresponding to the drive electrical signal, so as to drive the wheel to rotate, and further drive the vehicle to move forward or backward. According to the control logic, the control apparatus 231 may control the vehicle to gradually park in the first parking location based on the planned trajectory.

On the contrary, if the first obstacle exists, it indicates that the first parking location may be parking-unavailable. In this case, the control apparatus 231 may annotate the location of the first obstacle. Annotation may be implemented in a plurality of forms, for example, may include but is not limited to at least one of an HMI annotation, a voice prompt annotation, a direction alert tone annotation, a light annotation, a projection annotation, and the like.

The HMI annotation may be to control the display apparatus 222 to display the first obstacle in the parking area. There are a plurality of manners of displaying the first obstacle. For example, the manners may include but are not limited to: a graphic annotation, a text annotation, a color annotation, a pattern annotation, and the like.

The voice prompt annotation may be, for example, to send voice prompt information by using a voice device like an in-vehicle speaker (or an out-of-vehicle speaker if a vehicle model supports the out-of-vehicle speaker) or a voice assistant, to remind the user of a specific location of the first obstacle in the first parking location. The location may be, for example, a left vehicle body, a right vehicle body, a vehicle head, a vehicle middle, a vehicle rear, or a combination thereof, or may be another iconic location in the vehicle. This is not specifically limited.

The direction alert tone annotation may be to provide an alert tone from a corresponding direction relative to a driver inside the vehicle based on a location of the first obstacle relative to the first parking location. For example, when the first obstacle is located at the rear left in the first parking location, vibration or a ring tone may be provided through a speaker in a rear left seat of the vehicle, so that the user can intuitively feel the location of the obstacle when the vehicle is not parked in the first parking location, thereby improving parking experience.

The light annotation may be to annotate the location of the first obstacle by using an in-vehicle light or an out-of-vehicle light. For example, when the first obstacle is located at the front left in the first parking location, a front left turn light of the vehicle may be controlled to blink. For another example, when the first obstacle is located in a central area of the first parking location, an ambient light in the vehicle may be controlled to blink. Another example is not described.

The projection annotation may be to annotate the location of the first obstacle by using an in-vehicle projection device or an out-of-vehicle projection device. For example, the first parking location and a location occupied by the first obstacle in the first parking location may be displayed on a virtual image in front of a windshield by using an in-vehicle head-up display (head-up display, HUD). For another example, a direction of the first obstacle may be displayed inside the vehicle by using a vehicle-mounted projector, for example, displayed on a left window, a right window, a front row seat, a rear row seat, or other in-vehicle space. For another example, the first parking location may be projected in the surrounding environment of the vehicle by using the out-of-vehicle light, and the first obstacle is identified in the first parking location. For example, a parking space is projected in a location corresponding to the first parking location in an actual environment by using an intelligent headlight, and an obstacle like a pedestrian, a vehicle, or a stone block that is currently in the area is identified by using red light or light of another color. In this way, when the obstacle is a dynamic obstacle, this manner may give a signal to the dynamic obstacle, to enable the dynamic obstacle to leave the first parking location as soon as possible, so as to assist the user in completing parking.

Certainly, there may be another annotation manner. For example, an animation effect prompt may further be provided in an interface of a central control screen. For another example, a vibration or blinking prompt may be provided. For another example, a prompt may be displayed on an out-of-vehicle display. Another example is not described. This is not specifically limited in this application.

In a possible implementation, when the first obstacle includes a dynamic obstacle, the control apparatus 231 may further dynamically refresh an occupancy status of the first parking location. For example, when the vehicle does not leave the current location or leaves a short distance, the control apparatus 231 may further re-obtain, at an interval of 5s (or another short time), a surrounding environment collected by various sensors in real time, and re-determine, based on the surrounding environment, an obstacle that is in the first parking location or that is outside the first parking location but that is to interact with the first parking location, to update obstacle information displayed in the parking area, and notify the user of dynamic obstacle leaving information in a timely manner, assisting the user in parking in the available first parking location.

In a possible implementation, when determining to annotate the location of the first obstacle, the control apparatus 231 may annotate the location in a plurality of manners. The following provides three possible annotation manners as examples. In addition, for ease of understanding, the following three annotation manners are described by using an implementation of an HMI as an example.

### Annotation manner 1: direct annotation

In annotation manner 1, the control apparatus 231 may perform obstacle occupancy annotation on the first parking location based on the locations of the one or more obstacles sensed by the various vehicle-mounted sensors 211 to 213. In other words, obstacle occupancy annotation is directly performed on the obstacle in the first parking location. In other words, occupancy information of the obstacle is directly annotated on the first parking location, and the occupancy information may be a location, a size, an occupancy degree, or the like.

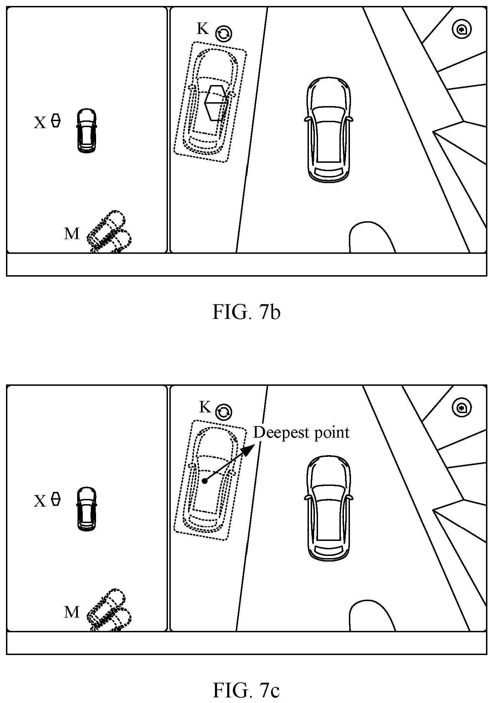

For example, the parking area shown in FIG. 5b is used as an example. Refer to FIG. 7a, FIG. 7b, and FIG. 7c. It is assumed that an obstacle X exists in a front left location of the vehicle, and the user just drags a virtual parking space to a location in which the obstacle X is located.

In an example, refer to FIG. 7a. The control apparatus 231 may control the display apparatus 222 to annotate a central location of the obstacle X in the first parking location, for example, annotate a circle or another shape at a center point of the obstacle X. Optionally, a line and text may further be annotated, and point to the center point, to display information indicating that the center point is an obstacle, so that the user quickly locates the center point.

In another example, refer to FIG. 7b. The control apparatus 231 may control the display apparatus 222 to annotate a contour of the obstacle X in the first parking location, so that the user accurately learns of an occupancy area of the first obstacle in the first parking location, to help the user quickly select a parking-available location outside the area.

In another example, refer to FIG. 7c. The control apparatus 231 may control the display apparatus 222 to annotate a location that is of the obstacle X and that is closest to the center point of the first parking location. In other words, a deepest point at which the obstacle X intrudes into the first parking location is annotated. For example, a circle or another shape is annotated at the deepest point, and an introduction is provided by using a line and text, so that the user can quickly locate the deepest point and learn of a degree of occupancy of the first obstacle in the first parking location.

In annotation manner 1, an occupancy status of the obstacle can be intuitively presented to the user, so that the user accurately learns of the location of the obstacle. It may be understood that, in addition to the foregoing three annotation examples, there may be other annotation examples such as a color annotation, a pattern annotation, and a symbol annotation. Details are not enumerated herein.

### Annotation manner 2: area annotation

In annotation manner 2, the control apparatus 231 may divide the first parking location into a plurality of subareas, and perform obstacle occupancy annotation on each subarea. For example, the control apparatus 231 may determine, from the plurality of subareas based on locations of obstacles sensed by the various vehicle-mounted sensors 211 to 213, a subarea in which an obstacle is located, and then control the display apparatus 222 to annotate the subarea in which the obstacle is located. A quantity of subareas may be any integer, for example, 4, 6, or 8, and is not specifically limited.

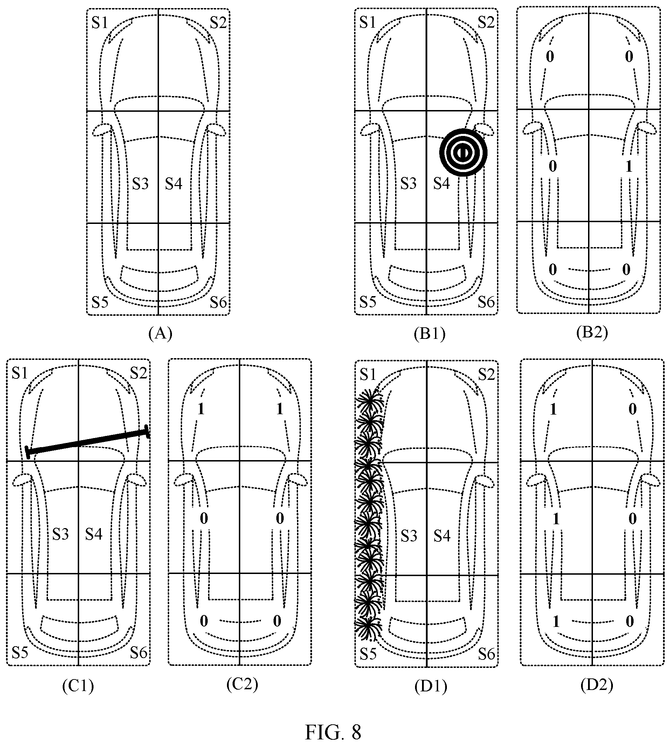

For example, six subareas are used as an example. (A) in FIG. 8 shows a possible subarea division manner of the first parking location. In this example, the control apparatus 231 may divide the first parking location into six subareas, and assign different identifiers (identifiers, IDs) to the six subareas, for example, S1, S2, S3, S4, S5, and S6. The subarea S1 and the subarea S2 are located at the vehicle head, the subarea S3 and the subarea S4 are located in the vehicle middle, and the subarea S5 and the subarea S6 are located at the vehicle rear. For any one of the six subareas, the control apparatus 231 may first determine whether the obstacle is completely or partially located in the subarea. If yes, the control apparatus 231 may determine that the subarea is occupied by the obstacle, and the control apparatus 231 may allocate a first attribute to the subarea. Otherwise, the control apparatus 231 may determine that the subarea is not occupied by the obstacle, and the control apparatus 231 may allocate a second attribute to the subarea. Then, the control apparatus 231 may annotate, based on attributes of the six subareas, the subarea to which the first attribute is allocated, and explicitly indicate, to the user in an external effect manner, the subarea occupied by the obstacle.

Optionally, the first attribute and the second attribute may be indicated in a plurality of manners, for example, a text indication, a pattern indication, and a digit indication. For example, in an example, the first attribute may be indicated by filling "1" in the subarea, and the second attribute may be indicated by filling "0" in the subarea. For example, refer to (B1) and (B2) in FIG. 8. If an obstacle (the figure uses a cone as an example) occupies only the subarea S4 of the first parking location, the control apparatus 231 may fill "1" in the subarea S4, and may fill "0" in the remaining subareas S1 to S3, S5, and S6. After filling is completed, the control apparatus 231 may control the display apparatus 222 to annotate the subarea (namely, S4) filled with "1". For another example, refer to (C1) and (C2) in FIG. 8. If an obstacle (the figure uses a wheel stop as an example) occupies both the subarea S1 and the subarea S2 of the first parking location, the control apparatus 231 may fill "1" in the subarea S1 and the subarea S2, and may fill "0" in the remaining subareas S3 to S6. After filling is completed, the control apparatus 231 may control the display apparatus 222 to annotate the subareas (namely, S1 and S2) filled with "1". For another example, refer to (D1) and (D2) in FIG. 8. If an obstacle (the figure uses a green plant as an example) occupies the subarea S1, the subarea S3, and the subarea S5 of the first parking location, the control apparatus 231 may fill "1" in the subarea S1, the subarea S3, and the subarea S5, and may fill "0" in the remaining subareas S2, S4, and S6. After filling is completed, the control apparatus 231 may control the display apparatus 222 to annotate the subareas (namely, S1, S3, and S5) filled with "1". There are many possible examples. Details are not enumerated herein.

Further, optionally, there are many implementations of annotating the subarea, for example, a graphic annotation, a text annotation, a color annotation, a pattern annotation, and a line annotation. For ease of understanding, the parking area shown in FIG. 5b and the location of the obstacle shown in (B1) in FIG. 8 are used as an example. It is assumed that the user drags the virtual parking space to the location of the obstacle X, and the control apparatus 231 determines that the obstacle X occupies the subarea S4 in the first parking location.

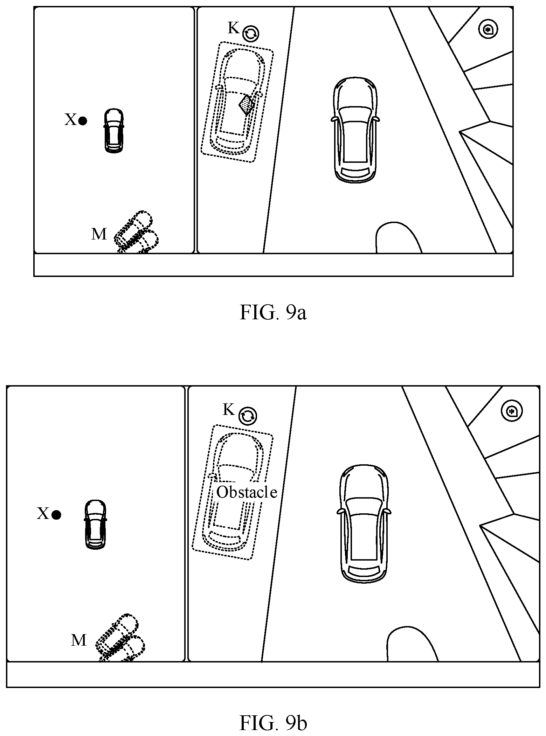

In an example, refer to FIG. 9a. The control apparatus 231 may control the display apparatus 222 to annotate a specified symbol in the subarea S4. The specified symbol may be, for example, a rhombus, a square, a triangle, a trapezoid, a circle, an annulus, or another regular or irregular shape. Optionally, to enable the user to focus on the location of the obstacle X more quickly, the annotated symbol may further have a color, for example, gray shown in the figure, or another color. Optionally, to enable the user to quickly distinguish between types of obstacles, different types of obstacles may be annotated by using different shapes and colors. For example, green plants are annotated by using a green triangle, a building is annotated by using a red circle, a wheel stop is annotated by using a gray rhombus, and a cone is annotated by using a blue square.

### Details are not enumerated herein.

In another example, refer to FIG. 9b. The control apparatus 231 may control the display apparatus 222 to annotate text in the subarea S4, for example, directly annotate text at a center point of the subarea S4, or annotate text outside the first parking location and draw an arrow (or a broken line, or another form) in the subarea S4 to point to the text. The annotated text may be unified, for example, "obstacle", as shown in FIG. 9b. Alternatively, different obstacles may be annotated by using different text. For example, a Chinese name of an obstacle is annotated, a number of an obstacle is annotated, an English name of an obstacle is annotated, or the like. Details are not enumerated herein.

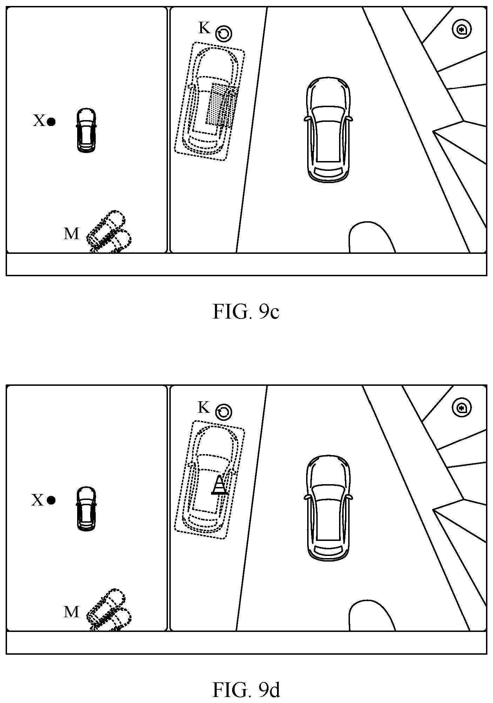

In another example, refer to FIG. 9c. The control apparatus 231 may control the display apparatus 222 to fill a color in the subarea S4, for example, fill the entire subarea S4 with a specified color. The specified color may be unified, for example, gray shown in FIG. 9c, or another color, for example, an obvious color like red. The red color has a highlight effect, so that the user can quickly focus on a location of an obstacle. Alternatively, different obstacles may correspond to different colors. For example, gray is used for a wheel stop, green is used for a green plant, red is used for a building, and blue is used for a cone. Details are not enumerated herein.

In another example, refer to FIG. 9d. The control apparatus 231 may control the display apparatus 222 to annotate a pattern in the subarea S4. For example, a pattern that can indicate a type of an obstacle may be annotated in the subarea S4. For example, when the obstacle X is a cone, a cone pattern shown in FIG. 9d may be annotated. By annotating the pattern indicating the type of the obstacle, the user can quickly learn of the type of the obstacle that occupies the parking location, and the user can conveniently plan a next parking location. Certainly, another pattern may alternatively be annotated. This is not specifically limited in this application.

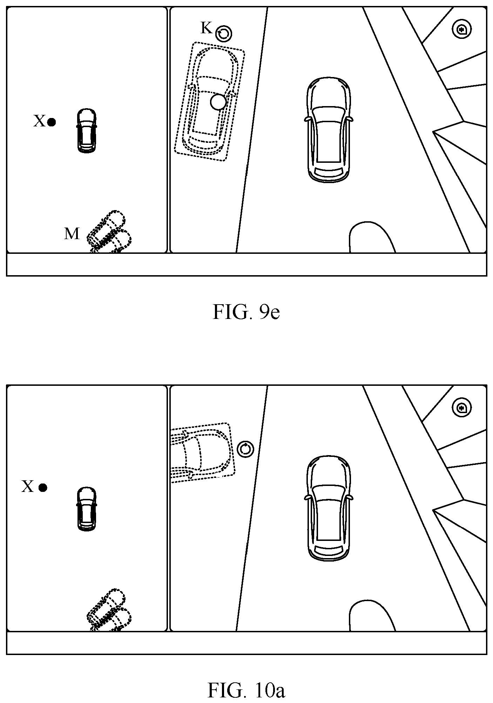

In another example, refer to FIG. 9e. The control apparatus 231 may control the display apparatus 222 to annotate a line in the subarea S4, for example, draw a contour occupied by an obstacle by using the line. The contour can help the user quickly learn of an actual size of the obstacle, and provide convenience for selecting another parking location.

In annotation manner 2, a subarea to which an obstacle belongs is annotated. Even if an actual location of the obstacle deviates from a detected location of the obstacle due to some reasons (for example, a detection error), the actual location of the obstacle can be included in the subarea to which the obstacle belongs, and annotated synchronously. This increases a probability that the user adjusts to a parking-available location based on the annotation. It may be understood that, in addition to the foregoing several annotation examples, there may be other annotation examples. Details are not enumerated herein.

### Annotation manner 3: edge annotation

In annotation manner 3, when a part of the first parking location is located outside the parking area, and the first obstacle occupies the part that is outside the parking area, the control apparatus 231 may annotate a location relationship between the first obstacle and the first parking location. For example, the control apparatus 231 may perform obstacle occupancy annotation on an edge of the parking area covered by the first parking location. There are also many implementations of edge annotation. For example, refer to FIG. 10a. It is assumed that the first parking location is located in the upper left corner of the parking area, a head part of the first parking location is located in the parking area, a tail part of the first parking location is located outside the parking area, and an obstacle X exists in the part that is outside the parking area. In this case, the control apparatus 231 may control the display apparatus 222 to annotate, in the parking area, location information indicating that "the obstacle X is located in a left direction of the current parking location". Examples are as follows:

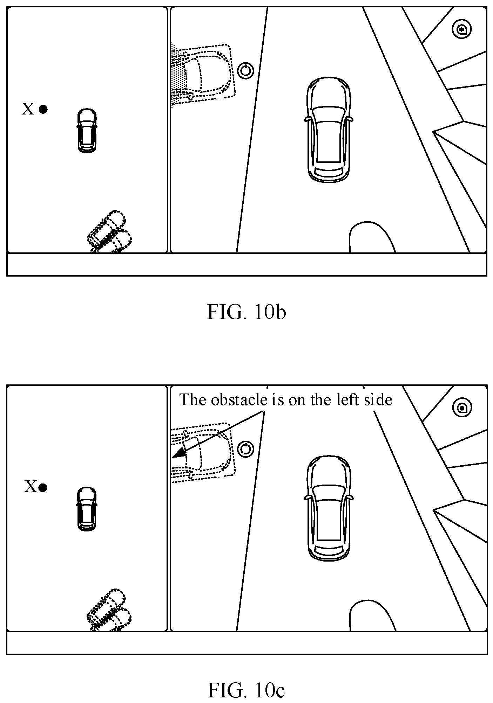

In an example, refer to FIG. 10b. The control apparatus 231 may control the display apparatus 222 to annotate a boundary part between the first parking location and the edge of the parking area by using a color, for example, black shown in the figure or an obvious red, to attract attention. Optionally, to improve a viewing effect, the color that needs to be annotated may be annotated in a form of light, for example, the edge is annotated by using red light, to improve aesthetics.

In another example, refer to FIG. 10c. The control apparatus 231 may control the display apparatus 222 to annotate a specific direction of the obstacle X in the first parking location by using an arrow and text, for example, annotate information indicating, to the user, that the obstacle is on the left side of the first parking location by pointing an arrow to a boundary location between the first parking location and the edge of the parking area, and by using text content "the obstacle is on the left side".

There are many other possible implementations of annotation. Details are not enumerated herein.

In the foregoing annotation manners, the user can intuitively learn of a specific direction of an obstacle outside the parking area in the first parking location, to further assist the user in accurately avoiding the direction in which the obstacle is located and quickly dragging a virtual parking space to a location without an obstacle, so as to implement efficient placement of a customized parking space and improve adjustment efficiency of the customized parking space.

It may be understood that, in addition to the foregoing three annotation manners, there may be another annotation manner. This is not specifically limited in this application.

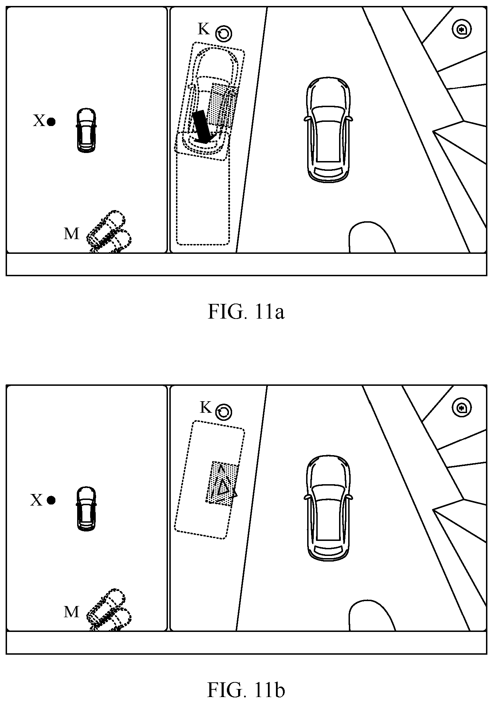

In a possible implementation, in addition to annotating the location of the first obstacle, the control apparatus 231 may further provide first recommendation information based on the location of the first obstacle and the surrounding environment of the vehicle. The first recommendation information indicates a recommended parking space adjustment direction and/or a recommended parking space adjustment location. The first recommendation information may be voice recommendation, display recommendation, vehicle light blinking recommendation, or the like. For example, both the parking space adjustment direction and the parking space adjustment location are recommended in a display manner. Refer to FIG. 11a. The control apparatus 231 may control the display apparatus 222 to display a dragging location and a dragging direction in the parking area, so that the user quickly moves the virtual parking space to the recommended parking location based on the recommended dragging direction, to accelerate parking.

In a possible implementation, in addition to annotating the location of the first obstacle, the control apparatus 231 may further annotate an association relationship between the first obstacle and a parking-available location. The association relationship may include, for example, an edge location of the first obstacle, and/or a critical safety location. The critical safety location is a location at a preset safety distance from the edge location of the first obstacle. For example, refer to FIG. 11b. Three solid lines in the first parking location represent edge location lines of the first obstacle, and three dashed lines represent location lines of the edge location of the first obstacle plus the preset safety distance, namely, critical safety location lines. When parking is available, for example, when an idle area around the first parking location is very large and is sufficient for the user to reselect a location that is far away from the current parking location, the user may drag the virtual parking space with reference to the critical safety location lines, so that the virtual parking space does not enter a range formed by the critical safety location lines. When parking is unavailable, for example, when an idle area around the first parking location is small and is sufficient for the user to reselect only a location that is close to the current parking location, the user may drag the virtual parking space with reference to the edge location lines of the first obstacle, so that the virtual parking space at least does not enter a range formed by the edge location lines. In this way, the user can more intuitively view an edge location or a critical safety location of an obstacle, to help the user quickly determine a safe area and more quickly select a parking-available location.

In a possible implementation, when determining that the first obstacle exists, before annotating the location of the first obstacle in the foregoing manner, the control apparatus 231 may further first identify the first obstacle. If the first obstacle is identified as an obstacle that affects parking, occupancy information may be annotated for the first obstacle. For example, the first obstacle may be annotated in any one of annotation manner 1 to annotation manner 3. On the contrary, if the first obstacle is an obstacle that does not affect parking, non-occupancy information may be annotated for the first obstacle. Optionally, if whether the first obstacle affects parking cannot be identified, unknown information may be annotated for the first obstacle.

Optionally, the non-occupancy information may be implemented in a plurality of forms. For example, in an example, the non-occupancy information may be implemented by not annotating. In this case, when the first obstacle is annotated in the parking area, it indicates that the first obstacle is the obstacle that affects parking. Therefore, the user may directly select a location that can avoid the first obstacle to adjust the parking space. For another example, in another example, the non-occupancy information may also be annotated in any one of annotation manner 1 to annotation manner 3, which is different from an annotation manner corresponding to the occupancy information. For example, the obstacle that does not affect parking is annotated in green, and the obstacle that affects parking is annotated in red. For another example, the obstacle that does not affect parking is annotated as a dot, the obstacle that affects parking is annotated as a circle, and the like.

Optionally, the unknown information may also be annotated in any one of annotation manner 1 to annotation manner 3, which is different from the annotation manners corresponding to the occupancy information and the non-occupancy information. For example, the obstacle that does not affect parking is annotated in green, the obstacle that affects parking is annotated in red, and an obstacle that cannot be identified whether to affect parking is annotated in yellow. For another example, the obstacle that does not affect parking is annotated as a dot, the obstacle that affects parking is annotated as a circle, and an obstacle that cannot be identified whether to affect parking is annotated as a triangle.

Optionally, occupancy information of obstacles with different impact degrees on parking may also be annotated in different manners. For example, an obstacle that greatly affects parking is annotated in red, an obstacle that moderately affects parking is annotated in gray, and an obstacle that slightly affects parking is annotated in blue. For another example, an obstacle that greatly affects parking is annotated as a pentagon, an obstacle that moderately affects parking is annotated as a quadrangle, an obstacle that slightly affects parking is annotated as a triangle, and the like.

Optionally, when the first obstacle is the obstacle that does not affect parking, the control apparatus 231 may further send first prompt information. The first prompt information is used to prompt the user to select whether to ignore the first obstacle. Then, if receiving a second instruction given by the user to ignore the first obstacle, the control apparatus 231 may control, based on the second instruction, the vehicle to automatically park in the first parking location. The first prompt information may be one or more of a voice prompt, a display prompt, a vehicle light blinking prompt, a vibration prompt, or the like. For example, the user may be prompted by voice through a vehicle-mounted speaker or another vehicle-mounted voice device, or the user may be prompted by displaying text in the parking area, or the user may be prompted by displaying text on a virtual image of a windshield through a HUD, or the user may be prompted by projecting a pattern or text through a vehicle light, or the like. This is not specifically limited. In addition, a manner in which the user triggers the second instruction may be a button tap, voice, a gesture, another interaction manner, or the like. This is not specifically limited.

Optionally, there are many optional identification manners for identifying whether the first obstacle affects parking. The following provides several examples for description.

In a possible identification manner, identification may be performed by using a neural network model. For example, the neural network model is trained in advance based on various known obstacles that affect parking and various known obstacles that do not affect parking, and then the first obstacle is identified by using the trained neural network model. Identification accuracy of this identification manner is high.

In another possible identification manner, first features of various obstacles that do not affect parking and second features of various obstacles that affect parking may be extracted in advance, and then the first obstacle is separately matched against the first feature and the second feature. If the first obstacle has the first feature, it may be determined that the first obstacle is an obstacle that does not affect parking. If the first obstacle has the second feature, it may be determined that the first obstacle is an obstacle that affects parking. If the first obstacle has neither the first feature nor the second feature, it is determined that the first obstacle is an obstacle whose impact on parking cannot be identified. The first feature may include at least one of the following features: a height of an obstacle is less than or equal to a specified height, a farthest distance at which an obstacle intrudes into a parking location is less than or equal to a specified distance, or another feature. The second feature may include at least one of the following features: the height of the obstacle is greater than the specified height, the farthest distance at which the obstacle intrudes into the parking location is greater than the specified distance, or another feature.

Optionally, the specified height may be set based on a chassis height of the vehicle. For example, the specified height may be set to a value slightly less than the chassis height. In this way, when a height of the first obstacle is less than or equal to the specified height, it indicates that the height of the first obstacle is less than the chassis height of the vehicle. Even if the vehicle crosses the obstacle, there is a high probability that a chassis is not scratched. Therefore, the first obstacle may be considered as an obstacle that does not affect parking. Certainly, the specified height may alternatively be set to another value. This is not specifically limited.

Optionally, the specified distance may be set based on a distance between a wheel and an edge of a vehicle body. For example, the specified distance may be set to slightly less than the distance between the wheel and the edge of the vehicle body. In this way, when the farthest distance at which the first obstacle intrudes into the parking location is greater than the specified distance, it indicates that the first obstacle has reached a location of the wheel. There is a high probability that the first obstacle blocks the wheel from moving. Therefore, the first obstacle may be considered as an obstacle that affects parking. Certainly, the specified distance may alternatively be set to another value. This is not specifically limited.

In another possible identification manner, a preset allowlist may be preconfigured based on various known obstacles that do not affect parking, and/or a preset blacklist may be preconfigured based on various known obstacles that affect parking. When a type of the first obstacle is in the preset allowlist, it may be determined that the first obstacle is an obstacle that does not affect parking; or when a type of the first obstacle is in the preset blacklist, it may be determined that the first obstacle is an obstacle that affects parking; or when the first obstacle is included in neither the preset allowlist nor the preset blacklist, it may be determined that the first obstacle is an obstacle whose impact on parking cannot be identified.

Optionally, identification information such as a name or a type of an obstacle that has very small impact on parking may be configured in the preset allowlist. The obstacle may include a soft material obstacle like a plastic bag or a carton, or another obstacle whose impact can be ignored. Correspondingly, identification information such as a name or a type of an obstacle that has large impact on parking may be configured in the preset blacklist. The obstacle may include a hard material obstacle like a lawn, a stone block, a curb, or a wheel stop, or another obstacle whose impact cannot be ignored.

It may be understood that whether the first obstacle affects parking may be determined in the foregoing single identification manner, or whether the first obstacle affects parking may be comprehensively determined by combining the foregoing plurality of identification manners, or there may be another identification manner. This is not specifically limited in this application.

In the foregoing implementation, the obstacle that affects parking and the obstacle that does not affect parking are distinguished and annotated, so that the user can learn of a type of a current obstacle, to respond to different types of obstacles more pertinently, and assist the user in quickly adjusting a parking location.

In a possible implementation, the control apparatus 231 may further annotate the static obstacle and the dynamic obstacle in different manners. For example, the static obstacle is annotated in red, and the dynamic obstacle is annotated in yellow. For another example, the static obstacle is annotated by using text, and the dynamic obstacle is annotated by using a graphic. For another example, the static obstacle is annotated by using a triangle, the dynamic obstacle is annotated by using a square, and the like. The static obstacle and the dynamic obstacle can be distinguished and annotated to present different display effects to the user, to improve parking viewing experience of the user.

It may be understood that the foregoing content provides merely examples of some possible implementations of obstacle annotation. This application does not limit to only these manners of annotating an obstacle in a parking area. Any annotation manner that can indicate a location of the obstacle to the user by using an external effect falls within the protection scope of this application. This is not specifically limited in this application.

To further describe the parking assistance method in this application, the following describes, with reference to some possible application scenarios, specific implementations of the parking assistance method in these application scenarios. In the following application scenarios, an example in which a color annotation manner is used and the first parking location is divided into six areas is used for description.

### Application scenario 1

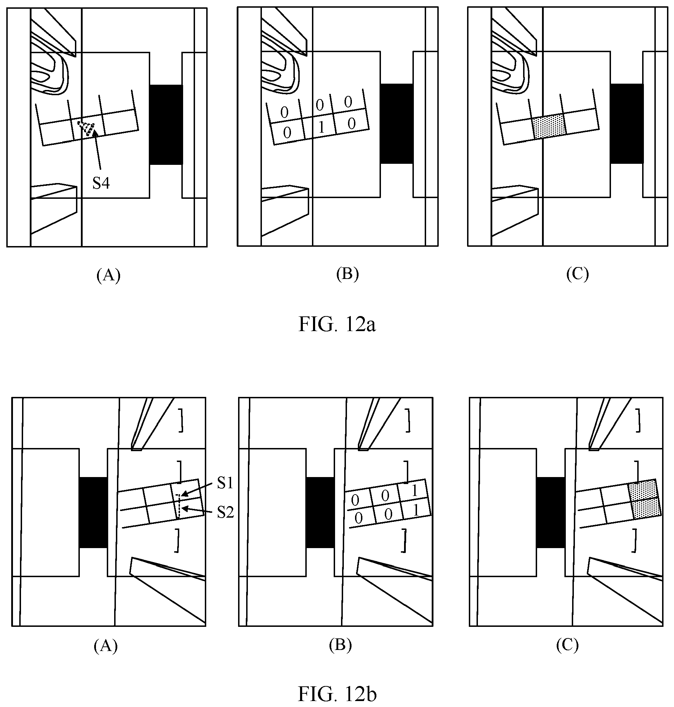

FIG. 12a is a diagram of annotating an obstacle in a parallel parking space according to this application.

As shown in FIG. 12a, it is assumed that the user drags a virtual parking space to the first parking location shown in (A) in FIG. 12a, and a cone exists in the first parking location in an actual scenario. In this case, the control apparatus 231 may determine, based on detection results of the various vehicle-mounted sensors 211 to 213, that there is an obstacle located in an area S4 of the first parking location. The area S4 is occupied by the obstacle. Therefore, the control apparatus 231 may fill "1" in the area S4 and fill "0" in the other areas, as shown in (B) in FIG. 12a. Then, as shown in (C) in FIG. 12a, the control apparatus 231 may annotate, by using a color, the area S4 filled with "1", and does not annotate the other areas by using the color. The annotated color may be gray shown in (C) in FIG. 12a, or may be another color, for example, red. This is not specifically limited.

### Application scenario 2

FIG. 12b is a diagram of annotating an obstacle in a perpendicular parking space according to this application.

As shown in FIG. 12b, it is assumed that the user drags a virtual parking space to the first parking location shown in (A) in FIG. 12b, and a wheel stop exists in the first parking location in an actual scenario. In this case, the control apparatus 231 may determine, based on detection results of the various vehicle-mounted sensors 211 to 213, that there is an obstacle crossing an area S1 and an area S2 of the first parking location. The obstacle blocks parking of a wheel. Therefore, the area S1 and the area S2 are occupied by the obstacle. The control apparatus 231 may fill "1" in the area S1 and the area S2 and fill "0" in the other areas, as shown in (B) in FIG. 12b. Then, as shown in (C) in FIG. 12b, the control apparatus 231 may annotate, by using a color like gray shown in (C) in FIG. 12b, the area S1 and the area S2 filled with "1".

### Application scenario 3

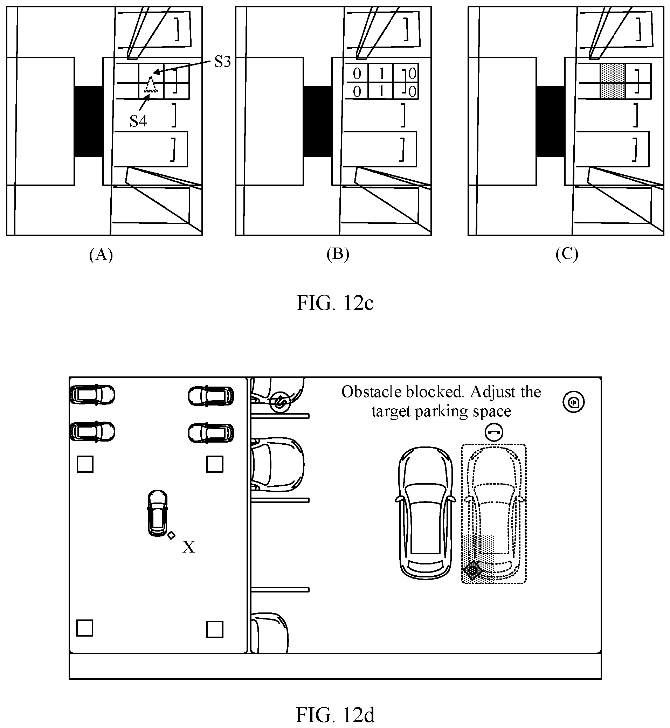

FIG. 12c is another diagram of annotating an obstacle in a perpendicular parking space according to this application.

As shown in (A) in FIG. 12c, it is assumed that the vehicle automatically generates four parking spaces, the four parking spaces are arranged in parallel from top to bottom, the user selects the second parking space on the top for parking, and a cone exists in a vehicle middle area of the second parking space in an actual scenario. In this case, the control apparatus 231 may determine, based on detection results of the various vehicle-mounted sensors 211 to 213, that there is an obstacle located in an area S3 and an area S4 of the second parking space. The area S3 and the area S4 are occupied by the obstacle. Therefore, the control apparatus 231 may fill "1" in the area S3 and the area S4 and fill "0" in the other areas, as shown in (B) in FIG. 12c. Then, the control apparatus 231 may annotate, by using a color like gray shown in (C) in FIG. 12c, the area S3 and the area S4 filled with "1".

### Application scenario 4

FIG. 12d is a diagram of annotating an obstacle in a parking area according to this application.

As shown in FIG. 12d, it is assumed that there is an obstacle X at a lower right corner of a current location of the vehicle, and the user drags a virtual parking space to a right side of the current location of the vehicle during automatic parking assist, so that a lower left area of a parking location obtained after dragging is blocked by the obstacle X. In this case, the control apparatus 231 determines, based on detection results of the various vehicle-mounted sensors 211 to 213, that the lower left area of the parking location obtained after dragging is occupied by the obstacle. Therefore, the control apparatus 231 may annotate, by using a color like gray shown in the figure, the lower left area of the parking location obtained after dragging. Optionally, to improve aesthetics of the parking area, the control apparatus 231 may further set a gradient effect for an edge of the area annotated by using the color, for example, the gradient effect gradually transitions from the gray shown in the figure to white used in another area, to improve viewing experience of the user.

In an example, as shown in FIG. 12d, to more clearly indicate a location of an obstacle, the control apparatus 231 may further annotate an actual location of the obstacle X in the lower left area by using a specified shape. The specified shape may be a square, a circle, a trapezoid, a cone, or a regular or irregular shape. The figure uses a square box including a circle as an example. Optionally, the specified shape may further be filled with a color deeper than that of another location, for example, dark gray shown in the figure, to attract attention of the user.

In an example, as shown in FIG. 12d, to help the user quickly learn that the current parking location is in a parking-unavailable state, text may further be displayed in an upper part (or another location) in the parking area. For example, FIG. 12d shows "Obstacle blocked. Adjust the target parking space" as an example. However, the text may alternatively be any other text content that can indicate the parking-unavailable state. This is not specifically limited in this application.

### Application scenario 5

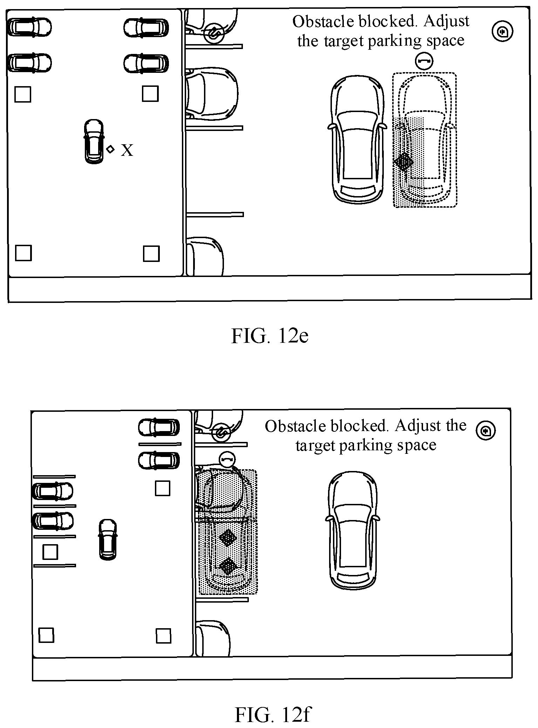

FIG. 12e is another diagram of annotating an obstacle in a parking area according to this application.

As shown in FIG. 12e, it is assumed that there is an obstacle X in a lower right part of a current location of the vehicle, and the user drags a virtual parking space to a right side of the current location of the vehicle during automatic parking assist, so that boundary locations of a lower left area and a left middle area of a parking location obtained after dragging are blocked by the obstacle X. In this case, the control apparatus 231 determines, based on detection results of the various vehicle-mounted sensors 211 to 213, that the lower left area and the left middle area of the parking location obtained after dragging are occupied by the obstacle. Therefore, the control apparatus 231 may annotate, by using a color like gray shown in the figure, the lower left area and the left middle area of the parking location obtained after dragging. Optionally, the boundary locations of the lower left area and the left middle area may further be annotated by using a specified shape, and the specified shape may be filled with a color deeper than that of another location, to attract attention of the user.

### Application scenario 6

FIG. 12f is another diagram of annotating an obstacle in a parking area according to this application.

As shown in FIG. 12f, it is assumed that there is a flowerbed on the left of a current location of the vehicle, there is another vehicle in the left front, and the user drags a virtual parking space to a left side of the current location of the vehicle during automatic parking assist, so that an entire vehicle body in a parking space obtained after dragging is blocked by the flowerbed and the another vehicle. In this case, the control apparatus 231 determines, based on detection results of the various vehicle-mounted sensors 211 to 213, that all areas of the parking space obtained after dragging are occupied by the obstacles. Therefore, the control apparatus 231 may annotate, by using a color like gray shown in the figure, all the areas of the parking space obtained after dragging. Optionally, a location of the flowerbed in all the areas may be annotated by using a specified shape, and the specified shape may be filled with a color deeper than that of another location, to attract attention of the user.

### Application scenario 7

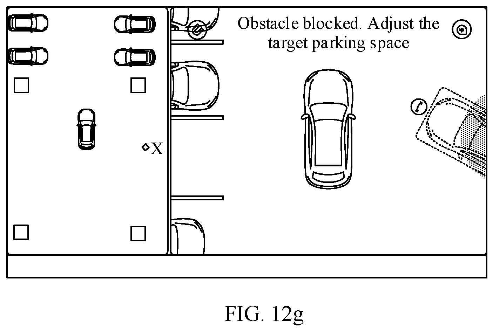

FIG. 12g is another diagram of annotating an obstacle in a parking area according to this application.

As shown in FIG. 12g, it is assumed that there is an obstacle X at a long distance in a lower right direction of a current location of the vehicle, and the user drags a virtual parking space to the lower right direction of the current location of the vehicle during automatic parking assist, so that a front half vehicle body of the virtual parking space is located in the parking area, a rear half vehicle body is located outside the parking area, and the rear half vehicle body is blocked by the obstacle X. However, because the blocked part is located outside the parking area, the obstacle is not displayed in the parking area. In this case, the control apparatus 231 may annotate, by using a color like gray shown in the figure, an edge of the parking area blocked by the obstacle. Optionally, to reflect a feature that the obstacle is located outside the parking area, the edge may be annotated in a form of light by using the obstacle as a light point, for example, annotated by using gray light shown in the figure, or light of another color such as red light. This is not specifically limited.

### Application scenario 8

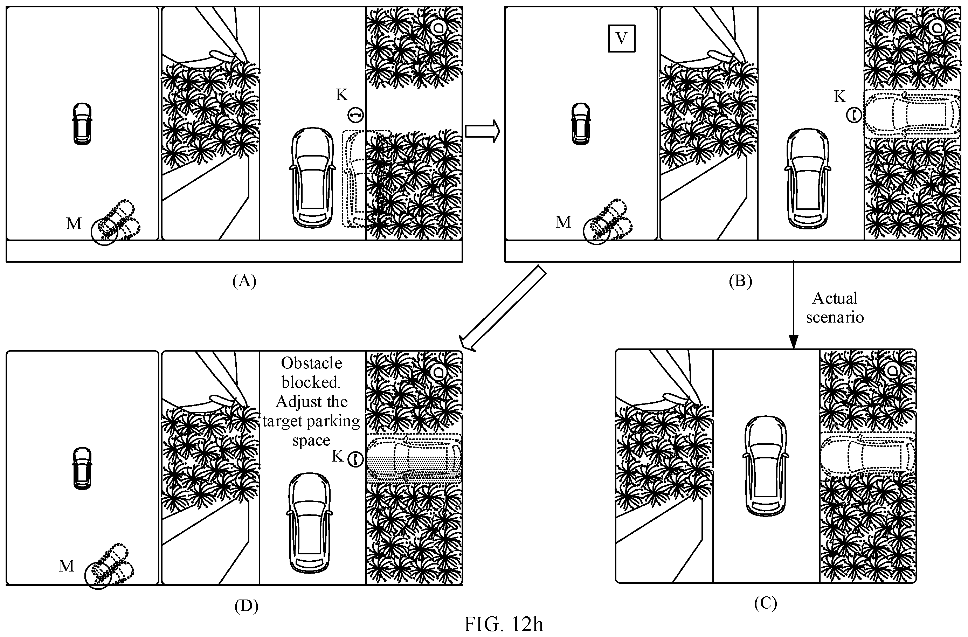

It is assumed that the vehicle is in the parking scenario shown in FIG. 1. FIG. 12h is another diagram of annotating an obstacle in a parking area according to this application. The figure shows an example in which only narrow space exists on the right of a current location of the vehicle.

First, it is assumed that after the user starts the automatic parking assist function, a parking interface shown in (A) in FIG. 12h is displayed on the display apparatus 222, and a button M of a parking space customization function exists in a lower right corner of a control area on the left side of the parking interface. In this case, if the user taps the button M, a default virtual parking space appears in a parking area on the right side of the parking interface. The virtual parking space is displayed near the vehicle, for example, on the right side of the vehicle shown in (A) in FIG. 12h. In addition, a rotation button K is further displayed above the virtual parking space. Then, refer to (B) in FIG. 12h. It is assumed that the user uses the parking space customization function to select a parking location. The user may touch and hold the virtual parking space and drag the virtual parking space to an idle area in an upper right corner, and touch and hold the rotation button K and rotate the rotation button K counterclockwise by 90°, so that the virtual parking space is exactly embedded in the idle area. Optionally, there is also an attraction button V in an upper right corner of the control area. After dragging the virtual parking space to the parking location, the user may tap the attraction button V, so that the virtual parking space is automatically attracted to the parking location. Further, with reference to (B) and (C) in FIG. 12h, green plants have intruded into a left area of a current parking location in an actual parking scenario. However, due to image distortion (for example, wide-angle IPM distortion) of the parking area, the user mistakenly considers that the currently selected parking location is not blocked by the green plants. In this case, the control apparatus 231 determines, based on detection results of the various vehicle-mounted sensors 211 to 213, that the left side of the current parking location is occupied by the obstacle. Therefore, the control apparatus 231 may annotate the left area of the current parking location by using a color like gray shown in (D) in FIG. 12h or an obvious color like red. In addition, an upper location in the parking area may further display a parking-unavailable state of the current parking location by using text, for example, "Obstacle blocked. Adjust the target parking space" shown in (D) in FIG. 12h. Optionally, a location of the obstacle blocking the parking location may further be indicated by using text, for example, "There is an obstacle on the left side of the target parking space to block. Adjust the target parking space", or another text description, so that the user can pay attention to the result more quickly, to assist in changing the parking location.

It can be learned from the foregoing content that the location of the obstacle is displayed in the parking area, so that the user is intuitively notified that the currently selected parking location is blocked by the obstacle, and the user accurately learns of a location relationship between the obstacle and the currently selected parking location. Further, the user can be assisted in avoiding the obstacle and quickly selecting a parking location that does not have an obstacle. This enhances efficiency of selecting a parking-available location by the user and improves parking experience of the user.

It should be noted that the foregoing content is described by using an example in which the parking assistance method is performed by the control apparatus in the vehicle. However, the parking assistance method may alternatively be performed by another device or component, for example, another component in the vehicle, including but not limited to: a vehicle-mounted terminal, a vehicle-mounted controller, a vehicle-mounted module, a vehicle-mounted component, a vehicle-mounted component, a vehicle-mounted chip, a vehicle-mounted unit, a vehicle-mounted radar, a vehicle-mounted camera, or another sensor, or an apparatus or component outside the vehicle, for example, a cloud server, a terminal device, an RSU, or another vehicle. The controlled vehicle may interact related information with these apparatuses or components to display an obstacle at a current parking location to the user, to assist the user in quickly selecting a parking location without the obstacle.

In addition, the parking assistance solution may further be extended to any device or system that has a requirement on parking efficiency. For example, the parking assistance solution may further be applied to any movable device having a parking assist function, including but not limited to a ship, an airplane, a high-speed railway, a train, a helicopter, a lawn mower, and the like. Alternatively, the parking assistance solution may further be applied to a mobile robot. For example, when an obstacle is detected in a parking location automatically planned by the mobile robot, related information about the obstacle is fed back to the user, to assist the user in quickly selecting a parking-available location. Another example is not described.

In addition, with evolution of a system architecture and emergence of a new scenario, the parking assistance method provided in this application is also applicable to a similar technical problem. This is not specifically limited in this application.

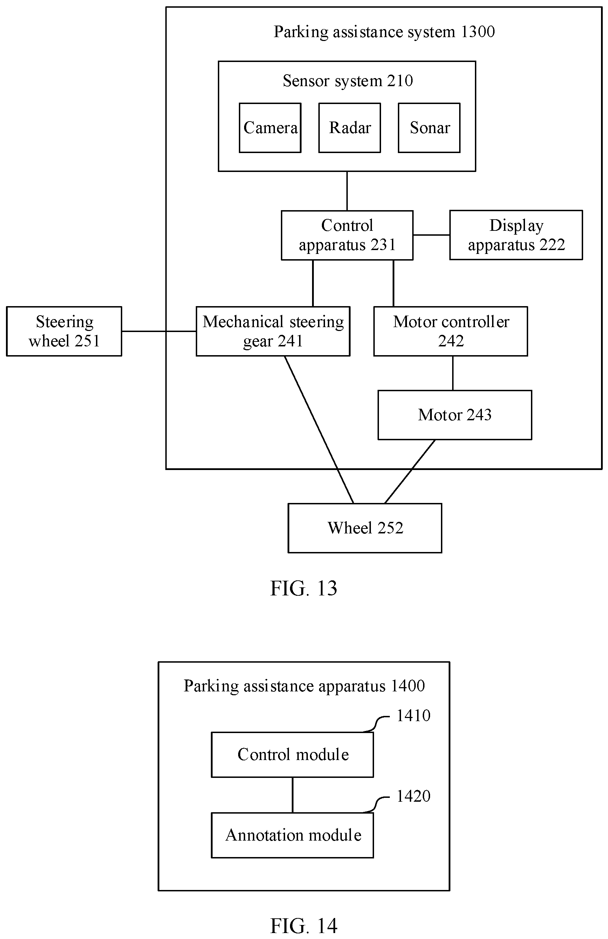

Based on the parking assistance method described above, this application may further provide a parking assistance system. FIG. 13 shows a diagram of a possible architecture of the parking assistance system. The parking assistance system 1300 may be integrated into a vehicle. The parking assistance system 1300 may include a control apparatus 231 and a display apparatus 222 connected to the control apparatus 231. The control apparatus 231 may be any device that can implement a control function in the vehicle, for example, an MDC, a VCU, or a VDC. The display apparatus 222 may be a vehicle-mounted display, for example, a dashboard, a central control screen, or a front passenger screen, or may be a projection screen, for example, a windshield, a side window, or a sunroof in a HUD. The control apparatus 231 is configured to: generate a parking area based on a surrounding environment of the vehicle, and send the parking area to the display apparatus 222. The display apparatus 222 is configured to display the parking area. The control apparatus 231 is further configured to control, based on a first instruction, the display apparatus 222 to display a first parking location, and annotate a location of a first obstacle, where the first obstacle includes an obstacle that interacts with the first parking location.

In a possible implementation, refer to FIG. 13. The parking assistance system 1300 may further include a sensor system 210. The sensor system 210 includes a camera, and the camera is configured to capture an environment image. The control apparatus 231 is connected to the camera, and is configured to: after detecting that the vehicle starts an automatic parking assist function, obtain the environment image captured by the camera, generate the parking area based on the environment image, and send the parking area to the display apparatus 222.

In a further possible implementation, refer to FIG. 13. The sensor system 210 may further include a radar and/or a sonar. The radar and/or the sonar is configured to collect environment information, and identify a location and/or a moving trajectory of an obstacle from the environment information. The control apparatus 231 is connected to the radar and/or the sonar, and is configured to determine, based on the location and/or the moving trajectory of the obstacle identified by the radar and/or the sonar, the obstacle that interacts with the first parking location.

In a possible implementation, refer to FIG. 13. The control apparatus 231 is further configured to control the vehicle to park in the first parking location when the first obstacle does not exist.

In a further possible implementation, refer to FIG. 13. The parking assistance system 1300 may further include a mechanical steering gear 241, a motor controller 242, and a motor 243. The mechanical steering gear 241 is connected between a steering wheel 251 of the vehicle and a wheel 252. The motor 243 is connected between the motor controller 242 and the wheel 252. The control apparatus 231 is specifically configured to: when the first obstacle does not exist, plan a parking trajectory of the vehicle based on a current location of the vehicle and the first parking location, determine a next turning angle and a next rotational speed based on the parking trajectory, send the turning angle to the mechanical steering gear 241, and send the rotational speed to the motor controller 242. The mechanical steering gear 241 is configured to drive the steering wheel 251 and the wheel 252 to rotate by a corresponding angle based on the turning angle from the control apparatus 231. Rotation of the steering wheel 251 may present steering information to the user, and rotation of the wheel 252 may drive the vehicle to turn. The motor controller 242 is configured to: generate a corresponding drive electrical signal based on the rotational speed from the control apparatus 231, and send the drive electrical signal to the motor 243. The motor 243 is configured to rotate based on the drive electrical signal from the motor controller 242, to drive the wheel 252 to rotate, and implement forward or backward movement of the vehicle.

It should be noted that, for functions of devices in the parking assistance system 1300, concepts, explanations, detailed descriptions, and other steps that are related to the technical solutions provided in this application, refer to the descriptions of the content in the foregoing method embodiments. Details are not described herein again.

Based on the foregoing described parking assistance method, this application may further provide a parking assistance apparatus. The parking assistance apparatus may be configured to perform the foregoing parking assistance method. For related features, refer to the foregoing method embodiments. Details are not described herein again.

In a possible implementation, refer to FIG. 14. FIG. 14 is a diagram of a possible structure of a parking assistance apparatus. A parking assistance apparatus 1400 may be a chip or a circuit, for example, a chip or a circuit that may be disposed in a vehicle, or a chip or a circuit that is disposed in an electronic device outside a vehicle. The parking assistance apparatus 1400 may correspond to the control apparatus in the foregoing method, for example, the control apparatus 231. The parking assistance apparatus 1400 may implement the steps performed by the control apparatus 231 in the method shown in FIG. 3, or may implement the steps performed by the control apparatus 231 in the system shown in FIG. 13.

As shown in FIG. 14, the parking assistance apparatus 1400 may include a control module 1410 and an annotation module 1420. When the parking assistance apparatus 1400 works, the control module 1410 is configured to: control a display apparatus to display a parking area, where the parking area is generated based on a surrounding environment of the vehicle; and control, based on a first instruction, the display apparatus to display a first parking location. The annotation module 1420 is configured to annotate a location of a first obstacle, where the first obstacle includes an obstacle that interacts with the first parking location.

For concepts, explanations, detailed descriptions, and other steps of the parking assistance apparatus 1400 that are related to the technical solutions provided in the embodiments of this application, refer to the descriptions of the content in the foregoing methods or other embodiments. Details are not described herein again.

It should be understood that division of the units of the parking assistance apparatus 1400 is merely logical function division. During actual implementation, all or some of the units may be integrated into one physical entity, or may be physically separated. This is not specifically limited in this application. For functions of the units in the parking assistance apparatus 1400, refer to implementations of the corresponding method embodiments. Details are not described herein again.

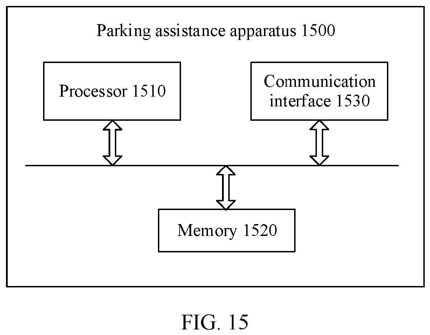

In a possible implementation, refer to FIG. 15. FIG. 15 is another diagram of a possible structure of a parking assistance apparatus. A parking assistance apparatus 1500 may be a chip or a chip system. Optionally, the chip system may include a chip, or may include a chip and another discrete device. As shown in FIG. 15, the parking assistance apparatus 1500 may include at least one processor 1510 and a memory 1520. The at least one processor 1510 is coupled to the memory 1520. The memory 1520 may be located inside the parking assistance apparatus 1500, or may be located outside the parking assistance apparatus 1500. The memory 1520 stores a computer program or instructions required for implementing any one of the foregoing method embodiments. The at least one processor 1510 completes the parking assistance method in any one of the foregoing method embodiments by executing the computer program or the instructions stored in the memory 1520.

The parking assistance apparatus 1500 may further include a communication interface 1530. The parking assistance apparatus 1500 may exchange information with another device through the communication interface 1530. The communication interface 1530 may be a circuit, a bus, a transceiver, or any other apparatus that may be configured to exchange information, or is referred to as a signal transceiver unit. When the parking assistance apparatus 1500 is a chip-type apparatus or a circuit, the communication interface 1530 in the parking assistance apparatus 1500 may also be an input/output circuit, and may input data (or referred to as receive data) and output data (or referred to as send data). The at least one processor 1510 is an integrated processor, a microprocessor, or an integrated circuit, and the at least one processor 1510 may determine output data based on the input data.

When the parking assistance apparatus 1500 is a control apparatus inside a vehicle, the at least one processor 1510 may obtain a computer program or instructions stored in the memory 1520, to perform the steps in any one of the foregoing method embodiments. For example, the at least one processor 1510 may communicate with a display apparatus in the vehicle through the communication interface 1530; control the display apparatus to display a parking area; control, based on a first instruction, the display apparatus to display a first parking location, where the parking area is generated based on a surrounding environment of the vehicle; and communicate with various vehicle-mounted sensors in the vehicle through the communication interface 1530, to annotate a location of a first obstacle, where the first obstacle includes an obstacle that interacts with the first parking location.

When the parking assistance apparatus 1500 is a control apparatus outside the vehicle, for example, an electronic device outside the vehicle, the at least one processor 1510 may obtain a computer program or instructions stored in the memory 1520, to perform the steps in any one of the foregoing method embodiments. For example, the at least one processor 1510 may communicate with a controlled vehicle through the communication interface 1530, so that a display apparatus of the controlled vehicle displays a parking area, where the parking area is generated based on a surrounding environment of the vehicle; control, based on a first instruction, the display apparatus to display a first parking location; and annotate a location of a first obstacle, where the first obstacle includes an obstacle that interacts with the first parking location.

The processor 1510 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this application. The general-purpose processor may be a microprocessor, any conventional processor, or the like. The steps of the methods disclosed with reference to this application may be directly implemented by a hardware processor, or may be implemented by a combination of hardware in a processor and a software module.

The memory 1520 may be a nonvolatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory 1520 in this application may alternatively be a circuit or any other apparatus that can implement a storage function, and is configured to store a computer program, a computer program or instructions, and/or data.

For concepts, explanations, detailed descriptions, and other steps of the parking assistance apparatus 1500 that are related to the technical solutions provided in embodiments of this application, refer to the descriptions of the content in the foregoing methods or other embodiments. Details are not described herein again.

Based on the parking assistance method described above, this application may further provide a vehicle. The vehicle may include a unit or a module configured to implement the foregoing parking assistance method, for example, may include the parking assistance apparatus shown in FIG. 14 or FIG. 15, or may include the parking assistance system shown in FIG. 13. Details are not described herein again.

For example, the vehicle may be a car, a truck, a motorcycle, a bus, a recreational vehicle, a playground vehicle, a construction device, a trolley, a toy car, a golf cart, a train, or the like. This is not particularly limited in this application. In addition, the vehicle may be a new energy vehicle, including an electric vehicle, for example, a two-wheel drive electric vehicle or a four-wheel drive electric vehicle, or may be a fuel vehicle. This is not limited in this application either.

Based on the parking assistance method described above, this application may further provide an electronic device. The electronic device may include a unit or a module configured to implement the foregoing parking assistance method, for example, may include the parking assistance apparatus shown in FIG. 14 or FIG. 15. The electronic device is connected to a controlled vehicle, and implements the foregoing parking assistance method by communicating with the controlled vehicle.

For example, the electronic device may be a cloud server, a terminal device, an RSU, another vehicle, or the like. This is not particularly limited in this application.

Based on the parking assistance method described above, this application further provides a computer-readable storage medium. The computer-readable storage medium stores a program or instructions. When the program or the instructions are run on a parking assistance apparatus, the parking assistance apparatus is enabled to perform the method shown in FIG. 3.

Based on the parking assistance method described above, this application may further provide a computer program product. The computer program product includes computer program code. When the computer program code is run on a computer, the computer is enabled to perform the method shown in FIG. 3.

"A plurality of" in this application refers to two or more than two. The term "and/or" describes an association relationship between associated objects and may indicate three relationships. For example, A and/or B may indicate the following cases: Only A exists, both A and B exist, and only B exists, where A and B may be singular or plural. "At least one of the items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural. In addition, in this application, the term "optionally" or "for example" is used to represent giving an example, an illustration, or a description. Any embodiment or design solution described as an "example" or "optional" in this application shall not be construed as being more preferred or more advantageous than another embodiment or design solution. Alternatively, it may be understood as that the word "example" or "optional" is used to present a concept in a specific manner, and does not constitute a limitation on this application.

In addition, "connection" in this application may be understood as an electrical connection, and a connection between two electrical elements may be a direct or indirect connection between the two electrical elements. For example, that A is connected to B may be that A is directly connected to B, or may be that A is indirectly connected to B through one or more other electrical components. For example, that A is connected to B may alternatively mean that A is directly connected to C, C is directly connected to B, and A is connected to B through C. In some scenarios, the "connection" may also be understood as coupling, for example, electromagnetic coupling between two inductors. To sum up, the connection between A and B can enable transmission of electric energy and a signal between A and B.

It may be understood that, in this application, various numeric numbers are distinguished merely for ease of description and are not used to limit the scope of embodiments of this application. Sequence numbers of the foregoing processes do not mean execution sequences. The execution sequences of the processes should be determined based on functions and internal logic of the processes. The terms "first", "second", and the like are used to distinguish between similar objects without having to describe a specific order or sequence. In addition, terms "including" and "having" and any variants thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

## Claims

1. A parking assistance method, wherein the method comprises:
controlling a display apparatus to display a parking area, wherein the parking area is generated based on a surrounding environment of a vehicle;
controlling, based on a first instruction, the display apparatus to display a first parking location; and
annotating a location of a first obstacle, wherein the first obstacle comprises an obstacle that interacts with the first parking location.

2. The method according to claim 1, wherein the obstacle that interacts with the first parking location comprises an obstacle in the first parking location and/or an obstacle that is outside the first parking location and that is to interact with the first parking location.

3. The method according to claim 1, wherein the first obstacle is displayed outside the first parking location, and the first obstacle is completely or partially located in the first parking location; and whether the first obstacle is completely or partially located in the first parking location is determined by the vehicle based on a sensing result of a vehicle-mounted sensor.

4. The method according to any one of claims 1 to 3, wherein the first parking location is a parking location automatically generated by the vehicle, and/or the first parking location is a parking location determined by a user.

5. The method according to any one of claims 1 to 4, wherein annotating the location of the first obstacle comprises:
performing environment sensing based on a plurality of sensors, and performing obstacle occupancy annotation on the first parking location.

6. The method according to any one of claims 1 to 5, wherein annotating the location of the first obstacle comprises:
annotating a location that is of the first obstacle and that is closest to a center point of the first parking location; or
annotating a contour of the first obstacle; or
annotating a central location of the first obstacle.

7. The method according to any one of claims 1 to 5, wherein annotating the location of the first obstacle comprises:
when the first parking location comprises a plurality of subareas, performing obstacle occupancy annotation on each subarea.

8. The method according to any one of claims 1 to 5, wherein annotating the location of the first obstacle comprises:
when a part of the first parking location is located outside the parking area, and the first obstacle occupies the part that is outside the parking area, performing obstacle occupancy annotation on an edge of the parking area covered by the first parking location.

9. The method according to any one of claims 1 to 8, wherein annotating the location of the first obstacle comprises:
identifying the first obstacle; and if the first obstacle affects parking, annotating the first obstacle as occupied; or if the first obstacle does not affect parking, annotating the first obstacle as unoccupied.

10. The method according to claim 9, wherein that the first obstacle affects parking comprises:
the first obstacle meets at least one of the following conditions: a height of the first obstacle exceeds a specified height, a farthest distance at which the first obstacle intrudes into the first parking location is greater than a specified distance, or the first obstacle is not in a preset allowlist.

11. The method according to claim 9 or 10, wherein if the first obstacle does not affect parking, the method further comprises:
sending first prompt information, wherein the first prompt information is used to prompt the user to select whether to ignore the first obstacle; and
controlling, based on a second instruction, the vehicle to park in the first parking location, wherein the second instruction is an instruction for ignoring the first obstacle.

12. The method according to any one of claims 9 to 11, wherein the method further comprises:
using at least two different annotation manners of an occupancy annotation, a non-occupancy annotation, or occupancy annotations with different impact degrees.

13. The method according to any one of claims 1 to 12, wherein the first obstacle comprises a dynamic obstacle and a static obstacle, and the dynamic obstacle and the static obstacle are annotated in different manners.

14. The method according to any one of claims 1 to 13, wherein the annotation comprises at least one of a human machine interface HMI annotation, a voice prompt annotation, a direction alert tone annotation, a light annotation, or a projection annotation.

15. The method according to claim 14, wherein the HMI annotation comprises at least one of the following: a graphic annotation, a text annotation, a color annotation, or a pattern annotation.

16. The method according to claim 15, wherein the direction alert tone annotation comprises:
providing an alert tone from a corresponding direction relative to a driver inside the vehicle based on a location of the first obstacle relative to the first parking location.

17. The method according to any one of claims 1 to 16, wherein the method further comprises:
providing first recommendation information based on the location of the first obstacle and the surrounding environment of the vehicle, wherein the first recommendation information indicates a recommended parking space adjustment direction and/or a recommended parking space adjustment location.

18. The method according to any one of claims 1 to 17, wherein the method further comprises:
annotating an edge location of the first obstacle; and/or
annotating a critical safety location, wherein the critical safety location is a location at a preset safety distance from the edge location of the first obstacle.

19. The method according to any one of claims 1 to 18, wherein the method further comprises:
projecting the first parking location in the surrounding environment of the vehicle, and annotating the first obstacle in the projected first parking location.

20. A parking assistance apparatus, comprising:
a control module, configured to: control a display apparatus to display a parking area, wherein the parking area is generated based on a surrounding environment of a vehicle; and control, based on a first instruction, the display apparatus to display a first parking location; and
an annotation module, configured to annotate a location of a first obstacle, wherein the first obstacle comprises an obstacle that interacts with the first parking location.

21. The apparatus according to claim 20, wherein the obstacle that interacts with the first parking location comprises an obstacle in the first parking location and/or an obstacle that is outside the first parking location and that is to interact with the first parking location.

22. The apparatus according to claim 20 or 21, wherein the first obstacle is displayed outside the first parking location, and the first obstacle is completely or partially located in the first parking location; and whether the first obstacle is completely or partially located in the first parking location is determined by the vehicle based on a sensing result of a vehicle-mounted sensor.

23. The apparatus according to any one of claims 20 to 22, wherein the annotation module is specifically configured to:
perform environment sensing based on a plurality of sensors, and perform obstacle occupancy annotation on the first parking location.

24. The apparatus according to any one of claims 20 to 23, wherein the annotation module is specifically configured to:
when the first parking location comprises a plurality of subareas, perform obstacle occupancy annotation on each subarea.

25. The apparatus according to any one of claims 20 to 23, wherein the annotation module is specifically configured to:
when a part of the first parking location is located outside the parking area, and the first obstacle occupies the part that is outside the parking area, perform obstacle occupancy annotation on an edge of the parking area covered by the first parking location.

26. The apparatus according to any one of claims 20 to 25, wherein the annotation module is specifically configured to:
identify the first obstacle; and if the first obstacle affects parking, annotate the first obstacle as occupied; or if the first obstacle does not affect parking, annotate the first obstacle as unoccupied.

27. The apparatus according to any one of claims 20 to 26, wherein the annotation comprises at least one of a human machine interface HMI annotation, a voice prompt annotation, a direction alert tone annotation, a light annotation, or a projection annotation.

28. The apparatus according to any one of claims 20 to 27, wherein the annotation module is further configured to:
provide first recommendation information based on the location of the first obstacle and the surrounding environment of the vehicle, wherein the first recommendation information indicates a recommended parking space adjustment direction and/or a recommended parking space adjustment location.

29. The apparatus according to any one of claims 20 to 28, wherein the annotation module is further configured to:
annotate an edge location of the first obstacle; and/or
annotate a critical safety location, wherein the critical safety location is a location at a preset safety distance from the edge location of the first obstacle.

30. A parking assistance apparatus, comprising a processor, wherein the processor is coupled to a memory; and
the processor is configured to execute a computer program or instructions stored in the memory, so that the parking assistance apparatus performs the method according to any one of claims 1 to 19.

31. A vehicle, comprising the parking assistance apparatus according to any one of claims 20 to 30.

32. A computer-readable storage medium, wherein the computer-readable storage medium stores a program or instructions, and when the program or the instructions are executed, the method according to any one of claims 1 to 19 is implemented.

33. A computer program product, wherein the computer program product comprises computer program code, and when the computer program code is run on a computer, the computer is caused to perform the method according to any one of claims 1 to 19.
